# EUROPEAN PATENT SPECIFICATION

(11) **EP 4 650 130 B1**
(45) Date of publication and mention of the grant of the patent: **02.09.2026**
(21) Application number: 24176644.3
(22) Date of filing: 17.05.2024
(51) Int. Cl.: B29B 7/76, B29B 7/80

(54) **HIGH PRESSURE MIXING HEAD FOR CONTINUOUSLY PRODUCING POLYMERIC FOAM**
HOCHDRUCKMISCHKOPF ZUR KONTINUIERLICHEN HERSTELLUNG VON POLYMERSCHAUM
TÊTE DE MÉLANGE À HAUTE PRESSION POUR LA PRODUCTION CONTINUE DE MOUSSE POLYMÈRE

(43) Date of publication of application: 19.11.2025
(73) Proprietor: Afros S.p.A., 21042 Caronno Pertusella (VA) (IT)
(72) Inventor: Volpato, Marco, 21042 Caronno Pertusella (VA) (IT); Corti, Maurizio, 21042 Caronno Pertusella (VA) (IT); Laera, Raffaele, 21042 Caronno Pertusella (VA) (IT); Olivieri, Pierangelo, 21042 Caronno Pertusella (VA) (IT)
(74) Representative: Uexküll & Stolberg

(56) References cited:
- EP-A1- 3 715 079
- KR-B1- 102 028 035

## Description

High pressure mixing heads for two or more reactive polymeric liquids are in wide-spread use in various industries for delivering quantities of reactive mixtures in succession to fill mould cavities to produce articles by injection moulding or to fill cavities, for example between inner and outer walls of refrigerator housings, to provide thermal insulation structures.

Besides the step-wise delivery of metered quantities of reactive polymeric mixture, also referred to as delivering "shots" for filling moulds or other cavities, there are continuous production methods for thermal insulation layers, for example of polyurethane or phenolic foam, i.e. dispensing of the reactive mixture is only interrupted at the end of a production run or at the end of a shift when production is terminated. In these continuous production methods high pressure mixing heads are used to distribute the reactive polymeric mixture on a substrate (for example a web of paper or plastic foil being unrolled from a supply roll) below the mixing heads, wherein the substrate is continuously advanced by conveying the substrate for example in a double belt conveyer which, by conveying the substrate with the polymeric foam on it and by providing upright side walls on the substrate, serves to contain the distributed polymeric foam as a layer between the side walls on the substrate. After solidification of the continuous foam layer, the continuous layer is cut into panels of desired length.

To obtain good quality and homogeneity of the dispensed and expanded foam, and to be able to use high production speeds of the substrate conveyor (e.g. 1 meter per second) it is preferred to use two or three mixing heads in parallel, which mixing heads are mounted next to each other in a row extending transversely to the moving direction of the substrate conveyor, wherein each of the mixing heads delivers a part of the polymeric foam that forms the foam layer on the advancing substrate.

In many cases so-called L-shaped mixing heads are used to obtain polymeric foam layers of improved quality, wherein often three such L-shaped mixing heads operate in a parallel arrangement transverse to the conveying direction.

The design of these L-shaped mixing heads, which are in fact not only used for continuous production, but also for step-wise injection molding processes, will be briefly explained with reference to the high pressure mixing head described in US 4 332 335 A1 which discloses an early example of such mixing head. The preamble of claim 1 is based on this high pressure mixing head described in US 4 3323 335 A1. The high pressure mixing head comprises a body in which a cylindric mixing chamber and injectors are formed for injecting at least two polymeric liquids into the mixing chamber. The polymeric liquids are supplied in a stoichiometric ratio by specific pumps under high pressure to the injectors, the injector ending in a nozzle that is adjustable to set the pressures of the delivered adjusted flow rates, and are injected, via the injectors, under high pressure, such that the ejected jets collide and are intimately mixed in the mixing chamber under highly turbulent conditions to form a reactive polymeric mixture in a very short time, a few milliseconds, during the residence time of the reactive polymeric mixture in the mixing chamber, whereafter the polymeric mixture is expelled from an output opening of the mixing chamber. A spool is slidably received in the mixing chamber and is moveable in the mixing chamber in a longitudinal direction thereof, wherein in a retracted position, the spool does not extend up to the injectors and thus permits that the injectors inject jets of the polymeric liquids into the mixing chamber; in an advanced position the spool is advanced in the mixing chamber beyond the injectors towards the output opening such that the polymeric liquids are prevented from entering the mixing chamber and are returned to be recycled via recycling channels. For this purpose, the spool is provided with longitudinal grooves or channels in its surface which, in the advanced position of the spool, are positioned to receive and redirect the polymeric liquids from the injectors to recirculation lines which are in flow communication with specific containment tanks from which the above-mentioned pumps can be supplied.

Movement of the spool is driven by a pneumatic or hydraulic actuator connected to the spool, and the movement of the spool to the advanced position in which a front end face of the spool is disposed in the output opening of the mixing chamber also serves, besides terminating delivery of reactive polymeric mixture, the purpose of cleaning the mixing chamber by expelling any remaining material and residuals from the interior of the mixing chamber by the advancing front end face of the spool, wherein the advancing spool also scrapes off thin layer of reacted polymer from the inner surface of the mixing chamber. Thus, in a step-wise operation mode, when repeatedly quantities of the reactive mixture are delivered to a mould, the mixing chamber is cleaned at the end of each mould filling step when the spool is moved to the advanced position to terminate the delivery of reactive mixture.

The output opening of the mixing chamber merges into an internal passageway in a delivery duct which is connected to the mixing chamber such that the longitudinal axis of the cylindrical internal passageway of the delivery duct extends perpendicular to the longitudinal axis of the mixing chamber. This arrangement of a mixing chamber and of a (longer) transverse delivery duct is an "L-shaped" arrangement, and this is the reason why such mixing heads are referred to as L-shaped mixing heads. The function of the delivery duct is to reduce turbulence and to dissipate kinetic energy of the reactive polymeric mixture expelled from the mixing chamber, wherein the kinetic energy of the reactive mixture flow is reduced when the expelled reactive mixture jet is hitting the opposite wall of the internal passageway of the delivery duct. and it is partially bouncing back and partially diverted to the delivery duct passageway to gradually dissipate and reduce its kinetic energy while the reactive mixture is completely diverted into the transversely extending delivery duct. This calms down the reactive mixture flow while it is flowing down along the delivery duct to an output end of the delivery duct for dispensing the polymeric foam resulting from the reactive polymeric mixture. The delivery duct is, as the mixing chamber, also self-cleaning, and for that purpose is provided with a rod of complementary cross-sectional shape to the internal passageway of the delivery duct, wherein the rod is connected to a piston of an actuator configured to move the rod between retracted position in which the rod leaves the output opening of the mixing chamber open and an advanced position in which the rod is moved to extend all along the internal passageway for cleaning it by advancing and expelling any remaining material and residuals from the internal passageway of the delivery duct. When the rod is in the advanced position it closes the internal passageway of the delivery duct such that the delivery duct is blocked.

In the continuous production systems for thermal insulation layers, the output end of the delivery duct is typically connected to a replaceable distributor which divides the flow of the polymeric foam dispensed by each mixing head into multiple flows, thereby distributing the flow in a direction transverse to the moving direction of the substrate carrying the dispensed foam to better distribute the foam and form a layer of uniform thickness across the substrate. The distributor can, for example, be provided with a plurality of small holes generating multiple jets, or can be provided with fan-shaped dispensers that dispense the output material poured transversely to the direction of advancement to distribute the reactive liquid mixture as even as possible across the width of the substrate carrying the polymeric mixture layer.

While L-shaped mixing heads are self-cleaning, when they are operated to deliver individual shots of reactive mixture, as has been described above, problems arise when they are operated to continuously deliver reactive mixture: On internal surfaces of the delivery ducts of the mixing heads and on the internal and external surfaces of the replaceable distributors, in continuous processes, a layer of reacted polymeric resins forms which increases in thickness over the time up to a point at which the flow of the polymeric mixture through them is disturbed, which prevents a homogeneous distribution, and may even block one or more of the distribution channels in the distributor. The faster the formation of this reacted resin layers takes place, the shorter is the time period after which the continuous delivery operation has to be interrupted and a mixing head cleaning cycle and/or a replacement of the replaceable distributors must be carried out.

In more detail, in the chambers and ducts where the reacting liquids flow, they form a very thin layer of liquid adhering to the walls which is referred to as boundary layer. This boundary layer reacts and polymerizes over the time and solidifies. When dispensing proceeds for a long period as in continuous foaming systems and this layer is not removed by the movement of the cleaning organs (spool and self-cleaning rod of the delivery duct), the boundary layer accumulates and increases in thickness of reacted resin on the walls of the ducts.

This phenomenon occurs in principle along all ducts along which the reactive mixture flows, but it is accentuated in areas of the ducts where speed and turbulence of the flowing mixture are reduced. Consequently, over the time, the thickness of the reacted resin increases and deteriorates the flow conditions up to the point of generating problems with the continuity and homogeneity of the distribution of the polymeric foam deposited on the substrate.

This stratification or boundary layer growth phenomenon is the faster the slower the flow speed in the duct is and the greater the reactivity of the resins is.

In the mixing chamber where the jets generated by the injectors cause impacts on the walls of the mixing chamber, where turbulence of the injected resins is intensive and where mixing is not yet complete, this accumulation does not occur or occurs only in some limited areas so that the stratification of reacted resin is marginal and much slower than in the delivery duct and the distributors. The accumulation therefore mainly occurs along the internal passageway of the delivery duct and along the distributor ducts, and particularly occurs in areas of flow slow-downs due to changes in flow cross-section and direction.

As already mentioned, disposable and replaceable flow distributors are normally applied downstream of the self-cleaning delivery duct. After some time, accumulation of polymerized resin develops in these distributor ducts and the distributors must be replaced by new and clean distributors. To replace them, it is up to now necessary to interrupt the delivery, implement a self-cleaning cycle of the mixing head by closing the spool in the mixing chamber and the self-cleaning rod in the delivery duct, and to proceed with the replacement of the distributors. In particular, during the self-cleaning cycle of the mixing head chips of reacted resin are expelled which tend to clog the connected distributor and these residues can also begin to hinder the next new distributor so that the replacement of the distributors should take place after completion of the self-cleaning operations of the mixing heads.

The interruption of supply for the time necessary to replace the distributor and to clean the connections causes numerous problems and costs for the producers of continuous insulation panels.

The activities of cleaning the heads and changing the replaceable distributors waste production time and produce a long section of panel waste due to the fact that it is not possible to stop the conveyor when dispensing stops because otherwise the foam would flow over and out of the walls of the conveyor.

To avoid these problems in the known art it is preferred to use reserve mixing heads to give continuity with a very short interruption to the supply.

In the known art, there are three working mixing heads and an equal number of three mixing heads are ready on standby to take the place of the first three mixing heads when they need to be interrupted for cleaning.

The three heads in standby require to be deployed on a special extendable and retractable support structure above the lower substrate before reaching the conveyor in the pouring position. Moreover, they require to be connected to flexible pipes (usually 8 for each mixing head) and to electrical cables plus to the same number of valves for switching the flow rate deliveries as well as to the recirculation lines to and from the respective polymeric liquid dosing means. The installation and connection of the standby mixing heads to the control and supply systems are expensive and cumbersome.

Therefore, in the current technique, to remedy the problem of the accumulation of reacted resin in the delivery and distribution ducts in continuous foaming systems, two racks of mixing heads are installed with preferably three mixing heads each. One rack delivers the reactive resins and the other rack is on standby with the mixings heads ready to take the place of the ones currently operating.

To switch over from the clogged mixing heads on the fly to the standby mixing heads, it is necessary to close the flows of resins delivered to the clogged mixing heads and switch them over to the standby mixing heads, already positioned above the substrate conveyor and equipped with new distributors.

Once mixing in the first three mixing heads is terminated by closing the respective spools, mixing on the three replacement mixing heads has to be initiated: The flows of reactive resins are diverted to the new mixing heads, these mixing heads are controlled by the control system to dispense mixture and the flows of reactive polymeric mixture towards the substrate resumes after seconds. Meanwhile the previous mixing heads can be removed from their dispensing position above the poring position in order to replace the used replaceable dispensers, clean their couplings and install the new distributors.

The switching over between the sets of mixing heads requires for the three additional mixing heads the complete installation of their support system and the installation of the valves that switch the flows of the resins in and out of the mixing heads. It is so far necessary to duplicate the valves that distribute the resins (at least 4 valves for each head), the flexible hoses that feed and recirculate the resins (at least 4 for each head), the hydraulic oil hoses (at least 4 hoses for each head), the oil control valves (at least 2 valves for each head). In addition, it is necessary to install and power the pressure and temperature sensors and the two proximity switches for each mixing head.

It is an object of the present invention to provide a high pressure mixing head that is capable of performing cleaning operations and replacement of disposable ducts during a continuous production run with reduced interruption time, with reduced installation work and with less components for the mixing heads. In particular, it is an object of the present invention to provide a mixing head which allows cleaning operations and replacement of disposable duct during a continuous production run without need for a complete standby mixing head and without need for duplicating control units for standby mixing heads. Furthermore, it is an object of the present invention to provide a mixing head which allows to switch over from an output duct to an alternate or standby output duct within a very short time period, without need to switch over to a separate complete mixing head.

This object is achieved by the high pressure mixing head comprising the features of claim 1. Preferred embodiments of the invention are defined in the dependent claims.

The high pressure mixing head for continuously mixing and delivering reactive mixture producing polymeric foam comprises a body including a mixing chamber and injectors for injecting at least two polymeric liquids into the mixing chamber. A spool is disposed moveable in the mixing chamber in a longitudinal direction thereof between a retracted position in which the injectors are able to inject jets of polymeric liquids into the mixing chamber to be mixed under turbulent conditions so that a reactive polymeric mixture is expelled from an output opening of the mixing chamber, and an advanced position in which the spool is advanced in the mixing chamber beyond the injectors and the polymeric reactive liquids from the injectors are returned to be recycled via recirculation lines.

The high pressure mixing head further comprises a delivery duct having a longitudinal axis disposed transversely to the mixing chamber. A rod is slidably received in an internal passageway of the delivery duct and is connected to a piston of an actuator which is configured to move the rod along the longitudinal axis of the delivery duct between a retracted position in which the internal passageway along the delivery duct is in flow communication with the mixing chamber to receive the reactive polymeric mixture expelled from the output opening of the mixing chamber for conveying it along the internal passageway and into a distributor connected to an output end of the delivery duct for dispensing the polymeric reactive mixture to produce foam resulting from the reactive polymeric mixture, and an advanced position in which it is moved all along the internal passageway to clean it, wherein the rod is of complementary cross-sectional shape to the internal passageway of the delivery duct up to the position it is moved to. The wording that the rod is of complementary cross-sectional shape to the internal passageway is intended to mean that the rod is able to close the internal passageway for fluid flow, but on the other hand there is sufficient clearance for the rod so that it is able to slide with the internal passageway.

Furthermore, it is noted here that the term "transverse" as used herein is understood to mean "situated or lying across" and not necessarily "perpendicular" in a strict sense. The transverse arrangements may preferably include angles close or equal to 90°, but may for example deviate by up to 20° from a right-angled arrangement.

According to the present invention the high pressure mixing head is provided with an alternate delivery duct having the same feature and functionality as the delivery duct, which alternate delivery duct therefore can take the place of the delivery duct when the latter needs cleaning in which case the alternate delivery duct takes over the task to convey polymeric mixture from the mixing chamber to a distributor for dispensing the polymeric reactive mixture to produce foam. The alternate delivery duct extends transversely to the delivery duct and to the mixing chamber. The delivery duct and the alternate delivery duct are in flow communication with the mixing chamber via a switchable flow connection. A control unit is configured to control the switching flow connection and the positions of the rods along the delivery ducts and the alternate delivery duct such that flow from the output opening of the mixing chamber can be selectively directed either to the delivery duct or to the alternate delivery duct.

In this manner it is possible, when, during a continuous production run, a cleaning operation of the delivery duct and/or a cleaning operation and a replacement of disposable distributors is necessary, to switch over from the delivery duct to the alternate delivery duct as immediate change (replacement) of the active output component, within a very short period of time (within seconds) and without any installation work for the switchover. The switchable flow connection and the positioning of the rods in the delivery duct and the alternate delivery duct in cooperation form a turnout or switch in the flow path from the mixing chamber, wherein this switch is controlled by the control unit to direct the output flow from the mixing chamber either to the delivery duct or to the alternate delivery duct, thereby allowing to switch over from the delivery duct to the alternate delivery duct, when cleaning and replacement of the distributor is required for the delivery duct, or vice versa from the alternate delivery duct to the delivery duct. In this connection no changes are required for the mixing chamber and its control, after switching over from the delivery duct to the alternate delivery duct as active output component, or vice versa, while the operation of the mixing chamber continues as before or, at most with a very short period of interruption of less than 2 seconds when its cleaning is necessary.

It has to be appreciated that, in comparison to the conventional use of two complete separate mixing heads, the high pressure mixing head according to the present invention allows to switch over to the alternate or standby delivery duct as active output component much faster because no installation work or other arrangements regarding the control unit are needed to guarantee a smooth transition between the delivery duct and the alternate delivery duct, with continued operation of the mixing chamber or, at most, with a very short period of interruption of less than 2 seconds when its cleaning is necessary.

It should be specifically noted that the high pressure mixing head according to the present invention is a much simpler solution and needs less components because the mixing chamber and its associated components is not duplicated as in the prior art where two separate mixing heads and two mixing chambers with their associated components and supply and recirculation lines were necessary. It also will be appreciated that the high pressure mixing heads according to the present invention permit that continuous production runs over extended periods of time can be performed with greatly improved efficiency because the time for switching over to an alternate delivery duct is drastically reduced and no installation work is needed in connection with the switchover.

In a preferred embodiment the switchable flow connection is formed by an enlarged diameter end portion of the internal passageway of the delivery duct and by a sleeve slidably received therein. The enlarged diameter end portion extends from the end of the delivery duct opposite to its output end and extends along the internal passageway beyond the output opening of the mixing chamber such that the enlarged diameter end portion is in flow communication with the output opening of the mixing chamber. The sleeve received in the enlarged end portion has an internal diameter equal and fitting to the internal diameter of the remaining internal passageway of the delivery duct, wherein equal and fitting to is not meaning equal to in a strict mathematical sense, but to include tolerances of +/- 1/350 of the diameter and a small clearance as required for the sleeve to be slidable. The sleeve is slidably moveable within the enlarged diameter end portion between a closing position in which it covers the output opening of the mixing chamber and a retracted position in which it leaves open at least part of the output opening of the mixing chamber to allow flow from the mixing chamber into the enlarged diameter end portion. The longitudinal axes of the delivery duct and of the alternate delivery duct do not extend in a common plane, but are shifted, in a direction perpendicular to the longitudinal axes of the delivery duct and the alternate delivery duct, with respect to each other to such extent that the enlarged diameter end portion of the delivery duct and the internal passageway of the alternate delivery duct intersect (in other words, the volumes of the enlarged diameter end portion of the delivery duct and of the internal passageway of the alternate delivery duct have an overlapping portion), thereby forming a delivery duct opening for a flow communication between the enlarged diameter end portion of the delivery duct and the internal passageway of the alternate delivery duct, such that, when the control unit controls the position of the sleeve to be in the retracted position, output from the mixing chamber is directed to the delivery duct by positioning the rod of the delivery duct to open its internal passageway and by positioning the rod of the alternate delivery duct to close its internal passageway, whereas output from the mixing chamber is directed to the alternate delivery duct by positioning the rod of the alternate delivery duct to open its internal passageway and by positioning the rod of the delivery duct to close its internal passageway. In this manner a simple and efficient switchover operation can be performed by positioning the rods of delivery duct and the alternate delivery duct accordingly. Furthermore, in this embodiment the movable sleeve received in the enlarged diameter end portion of the delivery duct forms a cleaning member which, by moving to the closing position, also cleans the enlarged diameter end portion. In this case of the longitudinal axes of the delivery duct and the alternate delivery duct not being in the same plane, the angle between the longitudinal axes is defined by projecting the longitudinal axes onto a plane that extends through the midpoint of the shortest line connecting the longitudinal axes and is perpendicular to this line.

In a preferred embodiment the delivery duct opening is located, in flow direction through the delivery duct, downstream of the output opening of the mixing chamber. Although an upstream location of the delivery duct opening would be a possible, the downstream location is preferred because in case of an upstream location the rod of the delivery duct would have to be retracted even further so that its front face is upstream of the delivery duct opening.

In a preferred embodiment the sleeve has an inclined inner end face (inclined with respect to a plane that is perpendicular to the longitudinal axis of the delivery duct), and a longitudinal inner end region of the enlarged diameter end portion is provided with an oppositely inclined end face facing the inclined end face of the sleeve such that, when the sleeve is moved to the closing position, its inclined end face is in abutment on the oppositely inclined end face of the inner end region, and such that, when the sleeve is moved to its retracted open position, an inclined gap is formed between the end face of the sleeve and the end face of the inner end region. This inclined gap forms, when the rod of the delivery duct is closing its internal passageway, an inclined annular flow path from the output opening of the mixing chamber, around the circumference of the rod of the delivery duct to the delivery duct opening and into the alternate delivery duct. Such annular flow path from the output opening of the mixing chamber to the internal passageway of the alternate delivery duct enhances mixing while it calms down any turbulences.

In a preferred embodiment the retracted position of the rod of the delivery duct is adjustable to a partial closing position in which its front end face is located downstream of the output opening of the mixing chamber and is located within the inner end region of the enlarged diameter end portion. This adjusted positioning is referred to as partial closing position because it is partially closing the output opening of the mixing chamber because the rod extends to a downstream position with respect to the output opening of the mixing chamber, but leaves open, when the sleeve is in the retracted open position, when the rod of the delivery duct is in the partial closing position and when the rod of the alternate delivery duct is in its advanced position closing its internal passageway, a flow path for fluid flow from the output opening of the mixing chamber through the inclined gap around the rod of the delivery duct and into the section of the inner end region of the enlarged diameter end portion and from there continues into the adjoining internal passageway of the delivery duct towards its output end. In this embodiment the fluid flow from the output opening of the mixing chamber is not directly into the internal passageway of the delivery duct but via an intermediate flow path through the annular inclined gap and around the peripheral surface of the rod of the delivery duct.

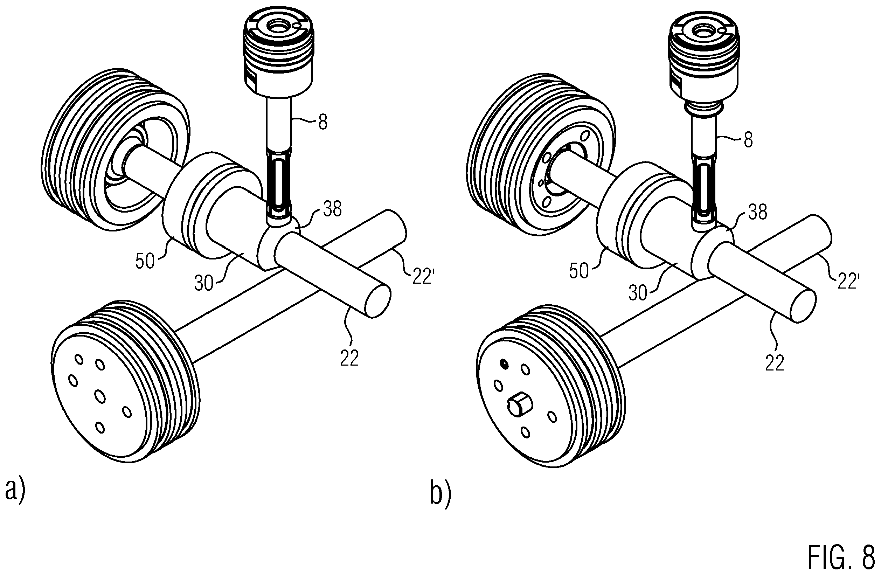

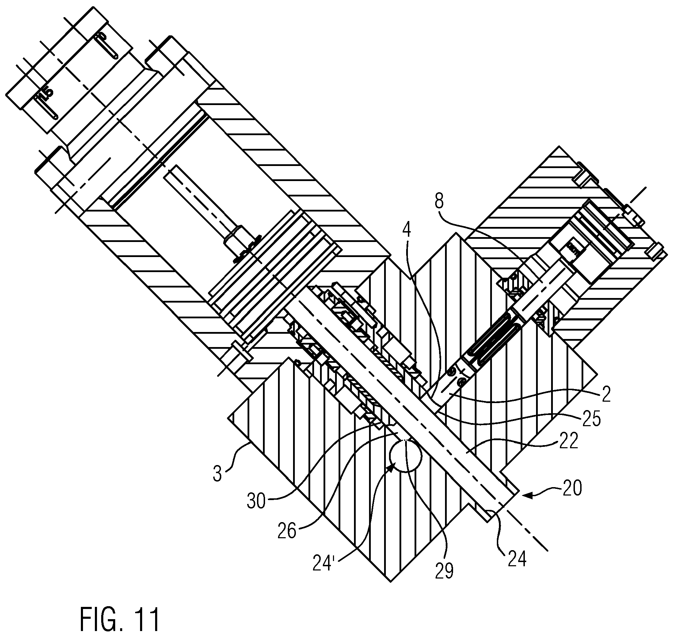

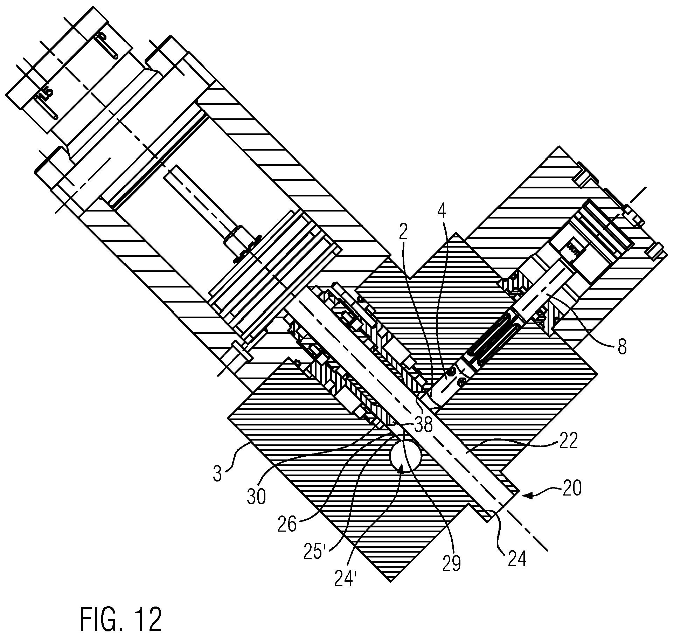

In an alternative embodiment the sleeve has characterized in that the sleeve has a frustro-conical end face that can be either outwardly inclined (i.e. the frusto-conical section extends axially beyond the cylindrical section of the sleeve as in Fig. 8) or inwardly inclined (i.e. the frusto-conical section extends axially into the cylindrical section of the sleeve and is formed in the interior of the sleeve as in Fig. 12), such that between the frustro-conical end face and an annular complementary frustro-conical shoulder terminating the enlarged diameter end portion of the internal passageway of the delivery duct an annular gap is formed, which annular gap forms, when the rod of the delivery duct is closing its internal passageway, an annular flow path around the rod of the delivery duct from the output opening of the mixing chamber to the delivery duct opening and into the alternate delivery duct; alternatively the sleeve has a flat end face (as in Fig. 11) such that between the flat end face and an complementary flat annular shoulder terminating the enlarged diameter end portion of the internal passageway of the delivery duct an annular gap is formed, which annular gap forms, when the rod of the delivery duct is closing its internal passageway, an annular flow path around the rod of the delivery duct from the output opening of the mixing chamber to the delivery duct opening and into the alternate delivery duct.

In this embodiment there are no inclined surfaces (inclined with respect to a plane that is perpendicular to the longitudinal axis of the delivery duct), neither on the end face of the sleeve nor in an inner end region of the enlarged diameter end portion.

In a preferred embodiment the inner end face of the sleeve is provided with a recess of complementary shape to a portion of the surface of the rod of the alternate delivery duct projecting through the delivery duct opening into the enlarged diameter end portion of the internal passageway of the delivery duct. When the rod is closing the alternate delivery duct, due to this configuration, the movement of the sleeve to its closing position is not obstructed since the projecting portion of the rod of the alternate delivery duct is received in the recess of the inner end face of the sleeve when it reaches its closing position.

In a preferred embodiment the sleeve is connected to a pneumatic or hydraulic actuation cylinder for selectively moving the sleeve between the retracted position and the closing position under the control of the control unit, wherein the sleeve, when it is moved from the retracted open position to the closing position, acts as a cleaning member for the enlarged diameter end portion of the internal passageway of the delivery duct, expelling the resin inside the annular gap into the delivery duct or the alternate delivery duct depending on which one of these is open.

In an alternative preferred embodiment, the switchable flow connection of the high pressure mixing head is realized in the following manner. The delivery duct and the alternate delivery duct are extending with their longitudinal axes in the same plane such that the internal passages of the delivery duct and the alternate delivery duct are crossing each other in a crossing zone. The longitudinal axis of the mixing chamber is inclined by less than 20° with respect to a normal to the plane of the delivery duct and the alternate delivery duct such that the output opening of the mixing chamber is merging into the crossing zone of the internal passageways of the delivery duct and the alternate delivery duct, wherein the output opening of the mixing chamber is not centered with respect to the intersection point of the longitudinal axes of the delivery duct and the alternate delivery duct, but is displaced along the bisecting line of the between the delivery duct and the alternate delivery duct towards the output ends of the delivery duct and the alternate delivery duct, thereby forming the switchable flow connection such that the switchable flow connection directs output flow from the mixing chamber around the rod of the alternate delivery duct into the internal passageway of the delivery duct beyond the crossing zone when the rod of the alternate delivery duct is positioned to extend beyond the crossing zone and the rod of the delivery duct is positioned to extend up to the rod of the alternate delivery duct, and such that the switchable flow connection directs output flow from the chamber around the rod of the delivery duct into the internal passageway of the alternate delivery duct beyond the crossing zone when the rod of the delivery duct is positioned to extend beyond the crossing zone and the rod of the alternate delivery duct is positioned to extend up to the rod of the delivery duct.

In a preferred embodiment the longitudinal axis of the mixing chamber is extending in a plane that is perpendicular to the plane of the delivery duct and the alternate delivery and that includes the bisecting line between delivery duct and the alternate delivery duct.

In a preferred embodiment the delivery duct and the alternate delivery duct are extending with their longitudinal axes in the same plane with their longitudinal axes forming an angle of 90°±20° with each other.

In a preferred embodiment the displacement of the output opening of the mixing chamber with respect to the intersection point of the longitudinal axes of the delivery duct and the alternate delivery duct and the diameters of the output opening of the mixing chamber and of the internal passageways of the delivery duct and the alternate delivery duct are such that, when the rod in the delivery duct extends through the crossing zone, a segment of the cylinder-cylinder intersection forming the crossing zone of the internal passageways is open for the output opening of the mixing chamber and communicating with the internal passageway section of the alternate delivery duct beyond the crossing zone, and such that, when the rod in the alternate delivery duct extends through the crossing zone, a segment of the cylinder-cylinder intersection is open for the output opening of the mixing chamber and communicating with the internal passageway section of the delivery duct beyond the crossing zone. The output opening of the mixing chamber is displaced with respect to the intersection point of the longitudinal axes of the internal passageways of the delivery duct and the alternate delivery duct such that there is an overlap of a segment of the output opening with a segment of the cylinder-cylinder intersection forming the crossing zone of the internal passageways for the internal passageways of each of the delivery duct and the alternate delivery duct. The output opening of the mixing chamber merges with the overlapping portions into the cylinder-cylinder intersection of the internal passageways of the crossing zone so that, when one of the rods extends through the crossing zone, output flow from the mixing chamber can flow through the overlapping portion into the internal passageway of the other one of the delivery duct and the alternate delivery duct.

In a further alternative embodiment the switchable flow connection is formed in the following manner. In this embodiment the delivery duct and the alternate delivery duct are also extending with their longitudinal axes in the same plane. The crossing zone of the internal passageways of the delivery duct and the alternate delivery duct is intersected by a cylindrical cavity extending with its cylinder axis perpendicular to the plane formed by the longitudinal axes of the delivery duct and the alternate delivery duct, wherein the cylinder axis of the cylindrical flow diverter is intersecting the intersection point of the longitudinal axes of the delivery duct and the alternate delivery duct. The cylindrical flow diverter is, as part of the switchable flow connection, located in the cylindrical cavity with its cylinder axis coaxial with the cylinder axis of the cylindrical cavity, wherein the cylindrical flow diverter is rotatable about its cylinder axis and is with its cylinder axis aligned with the longitudinal axis of the mixing chamber. The flow diverter further comprises a throughgoing transverse opening forming a continuation of the internal passageway of the delivery duct and the alternate delivery duct, respectively, when the flow diverter is, under control of the control unit, rotated so that its throughgoing transverse opening is aligned with the internal passageway of the delivery duct and the alternate delivery duct, respectively. The cylindrical flow diverter further comprises an input opening which is in communication with the output opening of the mixing chamber and which communicates with the throughgoing transverse opening of the cylindrical flow diverter, such that, when the rods of the delivery duct and the alternate delivery duct are retracted to keep the throughgoing transverse opening open for fluid flow from the input opening to the throughgoing transverse opening, the switchable flow connection is delivering output flow from the mixing chamber to the delivery duct when the cylindrical flow diverter is directed to be, with its throughgoing transverse opening, aligned with the internal passageway of the delivery duct, and such that the switchable flow connection is delivering output flow from the mixing chamber to the alternate delivery duct when the cylindrical flow diverter is rotated to be, with its throughgoing transverse opening, aligned with the internal passageway of the alternate delivery duct.

In a preferred embodiment the throughgoing transverse opening of the flow diverter has an inner diameter equal to the inner diameter of the internal passageways of the delivery duct and the alternate delivery duct such that, when the throughgoing transverse opening is aligned with the internal passageway of the delivery duct and the alternate delivery duct, respectively, the rod of delivery duct and the alternate delivery duct, respectively, can be advanced under the control of the control unit to move through the throughgoing transverse opening and the remaining part of the internal passageway of the delivery duct and of the alternate delivery duct, respectively, to expel reactive polymeric mixture and residuals for cleaning purposes from the internal passageway. The control unit is configured to, after completing such cleaning operation, to retract the respective rod from the throughgoing transverse opening of the cylindrical flow diverter again to allow rotation of the flow diverter to the next alignment position with the internal passageway of the delivery duct or the alternate delivery duct.

In a preferred embodiment the cylindrical cavity has a cross-sectional shape complementary to the cross-section of the cylindrical flow diverter.

In a further aspect a method is provided for continuously producing polymeric foam using a high pressure mixing head according to the present invention, characterized in that during a first phase of a continuous production run the switchable flow connection of the high pressure mixing head is set to direct polymeric mixture expelled from the mixing chamber through the delivery duct for dispensing the polymeric foam resulting from reactive polymeric mixture through the distributor onto a moving substrate below the distributor, in that for terminating the first phase and for initiating a second phase of the continuous production run the switchable flow connection and the positions of the rods in the delivery duct and the alternate delivery duct are switched over such that flow from the output opening of the mixing chamber is directed to the alternate delivery duct to thereby immediately switch over to the alternate delivery duct as active output component for dispensing the polymeric foam through the through distributor of the alternate delivery duct onto the moving substrate for continuing the continuous production run in its second phase, and in that during the second phase of the production run the delivery duct is cleaned and its distributor is cleaned or replaced.

In a further aspect a polymeric foam production system utilizing a plurality of high pressure mixing heads according to the present invention is provided which comprises the features of claim 17. Preferred embodiments of the system are set out in claims 18-20.

The present invention will now be described with reference to embodiments illustrated in the drawings in which:
Figs. 1a) and b) are schematical perspective views of interior components of a first embodiment of a mixing head to illustrate its operation principle;
Fig. 2 is a perspective external view of the mixing head of the first embodiment;
Fig. 3 is a partial cross-sectional view of the mixing head of the first embodiment, wherein a switchable flow connection is in a state that directs output flow from the mixing chamber to the internal passageway of the delivery duct and wherein the alternate delivery duct in a closed state;
Fig. 4 is a cross-sectional view of the mixing head of Fig. 3, wherein the switchable flow connection is in the state that directs fluid flow from the output opening of the mixing chamber into the internal passageway of the delivery duct;
Fig. 5 is a cross-sectional view of the mixing head of the previous Figures, wherein the switchable flow connection is in an alternative state that directs output flow from the output opening of the mixing chamber into the internal passageway of the delivery duct;
Fig. 6 is a cross-sectional view of the mixing head of the first embodiment as in the previous Figures, wherein the switchable flow connection is in a state in which out flow from the output opening of the mixing chamber is directed to the internal passageway of the alternate delivery duct;
Fig. 7 is a cross-sectional view of alternate delivery duct with the rod in the retracted position so that output flow from the mixing chamber can be directed by the switchable flow connection to the internal passageway of the alternate delivery duct;
Figs. 8 a) and b) are schematical perspective views of internal components of the mixing head according to a second embodiment to illustrate its operation principle;
Fig. 9 is a cross-sectional view of the mixing head of the second embodiment, wherein the switchable flow connection is in a state that directs fluid flow from the output opening of the mixing chamber into the internal passageway of the alternate delivery duct;
Fig. 10 is a cross-sectional view of the mixing head of Fig. 9, wherein the switchable flow connection is in a completely closed state preventing fluid flow from the output opening of the mixing chamber to any of the delivery duct and alternate delivery duct;
Fig. 11 is a cross-sectional view of a modified version of the second embodiment, wherein the switchable flow connection is in the state that directs output flow from the output opening of the mixing chamber into the internal passageway of the alternate delivery duct;
Fig. 12 is a cross-sectional view of a further modified version of the second embodiment, wherein the switchable flow connection in the state that directs output flow from the output opening of the mixing chamber into the internal passageway of the alternate delivery duct;
Figs. 13 a) and b) are schematical perspective views of internal components of the mixing head according to a third embodiment to illustrate its operation principle, and Figs. 13 c) is a perspective view of the spool of the mixing head according to the third embodiment to illustrate the shape of the mixing head facing end of the spool adapted to the shape of the crossing zone;
Fig. 14 is a cross-sectional view of the mixing head of the third embodiment taken in the plane of the internal passageways of the delivery duct and the alternate delivery duct, wherein the switchable flow connection is in the state that directs output flow from the output opening of the mixing chamber into the internal passageway of the delivery duct, together with an enlarged detail of a crossing zone of the internal passageways;
Fig. 15 is a cross-sectional view of the mixing head of Fig. 14, wherein the switchable flow connection is in a state that directs fluid flow from the output opening of the mixing chamber into the internal passageway of the alternate delivery duct together with an enlarged detail of a crossing zone of the internal passageways;
Fig. 16 a) and b) are schematical perspective views of internal components of the mixing head according to a fourth embodiment to illustrate its operation principle;
Figs. 17 a) and b) are further schematical perspective views as in Figs. 16 a) and b) in a different state of the switchable flow connection of the fourth embodiment;
Fig. 18 is a cross-sectional view of the mixing head of the fourth embodiment, wherein the cross-sectional view shows the mixing chamber and the delivery duct in cross-section, wherein the switchable flow connection is in a state that directs output flow from the output opening of the mixing chamber into the internal passageway of the delivery duct;
Fig. 19 is a cross-sectional view of the mixing head of Fig. 18, wherein the cross-section is taken in the common plane of the delivery duct and the alternate delivery duct and wherein the switchable flow connection is in the state directing fluid flow from the output opening of the mixing chamber into the internal passageway of the delivery duct;
Fig. 20 is a perspective external view of the mixing head;
Figs. 21a and 21b show a perspective views of a multiple mixing head assembly, wherein in Fig. 21b one of the two subassemblies of distributors is detached from its associated delivery ducts and in transverse direction moved out of the area above the conveyor;
Fig. 22 is a side view, partially in cross-section, of the multiple mixing head assembly of Fig2. 21a and 21b; and
Fig. 23 is a cross-sectional view of a connection area of a delivery duct and its associated distributor.

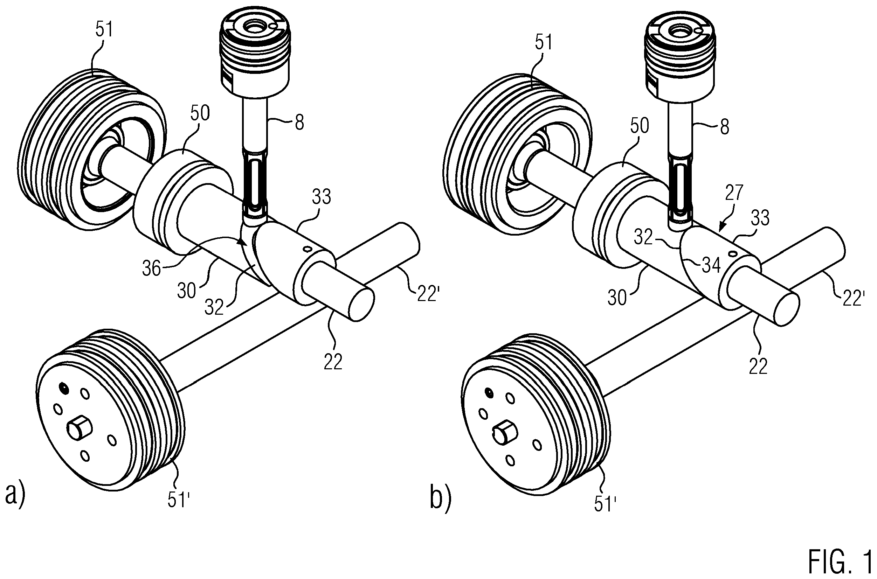

Figs. 1a) and b) show perspective views of internal components of a first embodiment of the mixing head in a very schematical manner to allow an easier understanding of the working principle of the high pressure mixing head. The mixing head comprises a mixing chamber, a delivery duct and an alternate delivery duct. In the mixing chamber a spool 8 is slidably received, and in the delivery duct a rod 22 is received which is attached to a piston which allows to move the rod 22 to a retracted position in which it is retracted beyond the mixing chamber such that the section of the internal passageway of the delivery duct downstream of the mixing chamber is open, and an advanced position in which the rod 22 extends all along the internal passageway of the delivery duct to its output end.

In the internal passageway of the alternate delivery duct a corresponding rod 22' is slidably received and likewise connected to a piston which allows to move it between the retracted and the advanced position in the same way as the rod 22 of delivery duct.

In Figs. 1a) and b) the mixing chamber, the delivery duct and the alternate delivery duct are not shown but only the spool 8, and the rods 22, 22' which are slidably disposed therein. In Figs. 1 a) and b) both rods 22, 22' are shown in an advanced position to illustrate the extension of the internal passageways of the delivery duct and the alternate delivery duct. Likewise, the spool 8 is shown in the advanced position in which the front end face of the spool 8 is located in the output opening of the mixing chamber to illustrate where the output opening of the mixing chamber is located in this schematical illustration of the mixing head.

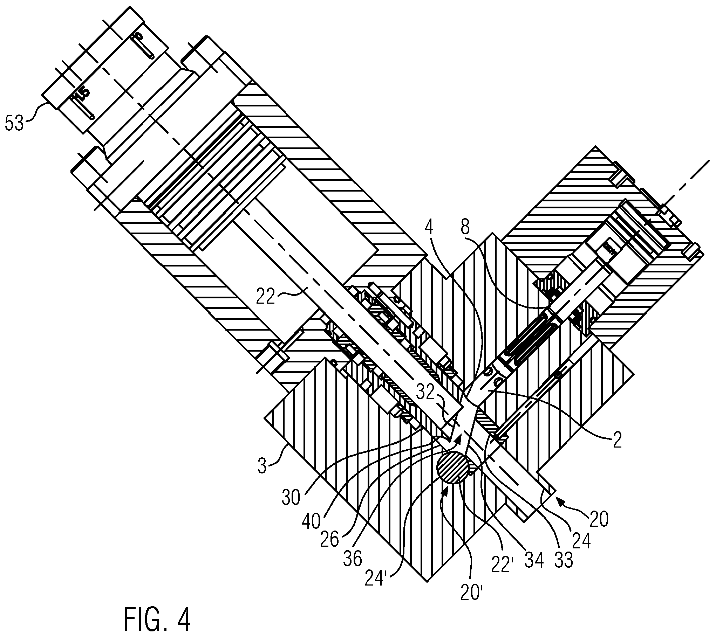

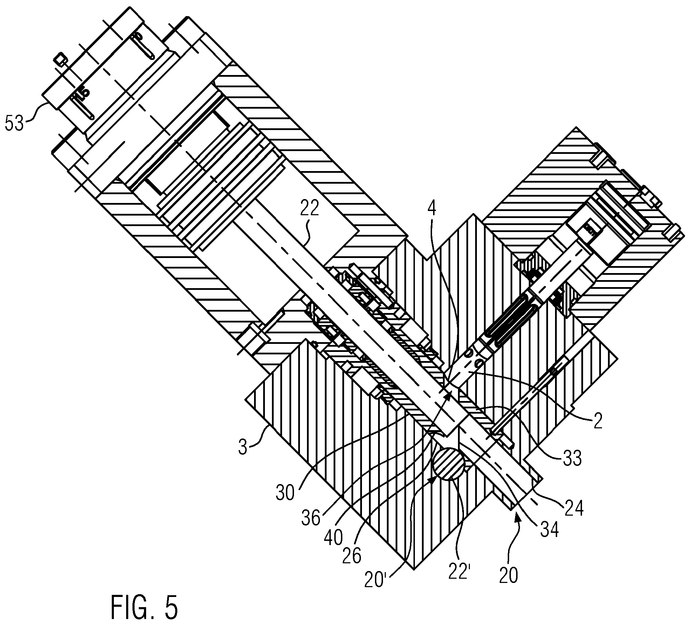

In an enlarged diameter end portion of the internal passageway of the delivery duct which is located opposite to the output end of the delivery duct a sleeve 30 is slidably received. Opposite to the slidable sleeve 30 a fixed sleeve end section 33 is disposed. The sleeve 30 has an inclined inner end face 32, and the fixed sleeve section 33 has an oppositely inclined end face 34. In the illustrated embodiment the fixed sleeve section 33 is shown as a separate member that is inserted into the enlarged diameter end portion 26 (see Figs. 4, 5) and fixed therein. However, instead of fixing a separate sleeve section 33 in the end section of the enlarged diameter end portion, this end section could also be formed by machining the enlarged diameter end portion 26 into the mix head body 3 so that this end section would be part of the body 3, instead of being a separate member 33 as in the illustrated embodiment.

The sleeve 30 is coupled to a piston which can move it between an open position in Fig. 1 a) and an advanced closed position in Fig. 1 b) in which the sleeve 30 covers the output opening of the mixing chamber. Accordingly, the output opening the mixing chamber is in the state of Fig. 1 a) open towards an inclined gap 36 between the sleeve 30 and the fixed sleeve section 33. In this state output flow from the output opening of the mixing chamber can flow into the inclined gap 36 and, depending on the positioning of the rods 22, 22', from there either into the internal passageway of the delivery duct (surrounding rod 22) or in the internal passageway of the alternate delivery duct (surrounding the rod 22').

In the state of Fig. 1 b) the output opening of the mixing chamber is closed by the sleeve 30 so that there is no output flow from the mixing chamber and the mixing head is in a closed state.

In the state of Fig. 1 a) output flow from the mixing chamber could, if the spool 8 would be in its retracted position to open the mixing chamber, flow into the inclined gap 36 between the sleeve 30 and the fixed sleeve end sections 33, wherein the moveable sleeve 30 forms part of the switchable flow connection. If in the state of Fig. 1 a) (with spool 8 retracted) output flow from the mixing chamber flows into the inclined gap 36, the positioning of the rods 22, 22' determines whether the output flow from the mixing chamber is directed into the internal passageway of the delivery duct or of the alternate delivery duct.

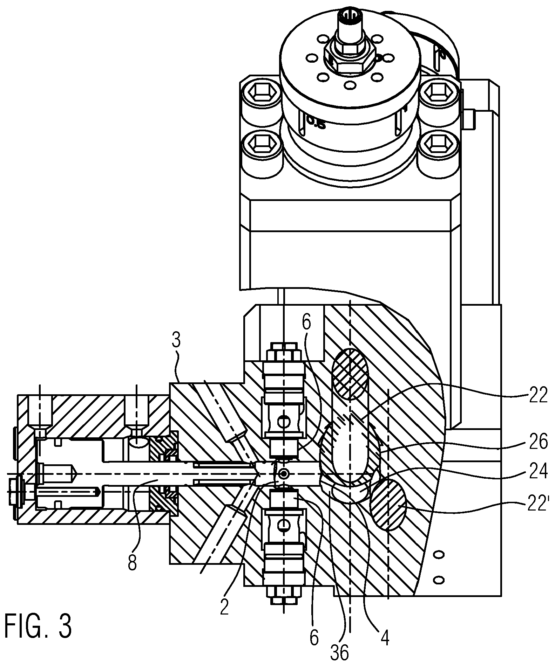

If in the state of Fig. 1 a) the rod 22 of the delivery duct is retracted such that its front end face is in the axial region of the internal passageway of the delivery duct in which the inclined gap 36 is located (as shown in Fig. 3), and the rod 22' of the alternate delivery duct is in the advanced position as shown, output flow from the mixing chamber flows through the internal gap 36 and from there into the internal passageway of the delivery duct beyond the front end face of the rod 22.

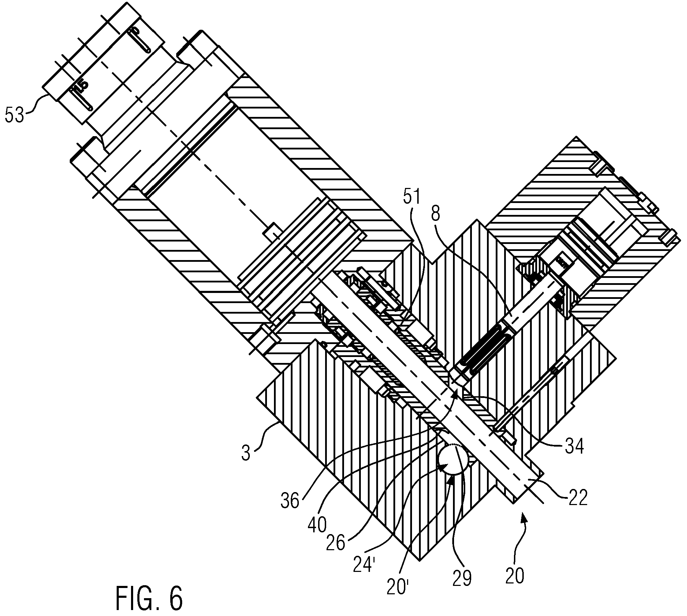

If in the state of Fig. 1 a) (again with the spool 8 being retracted to open the mixing chamber) the rod 22 is in an advanced position as shown in Fig. 1 a) and the rod 22' is, from the advanced position shown in Fig. 1 a) retracted, like in Fig. 6, output flow from the mixing chamber enters the inclined gap 36, flows around the circumferential surface of the advanced rod 22 and from the inclined gap 36 through a delivery duct opening, which forms an opening connecting the enlarged diameter end portion of the internal passageway of the delivery duct and the internal passageway of the alternate delivery duct, into the internal passageway of the alternate delivery duct, thereby directing the output flow from the inclined gap 36 to the internal passageway of the alternate delivery duct.

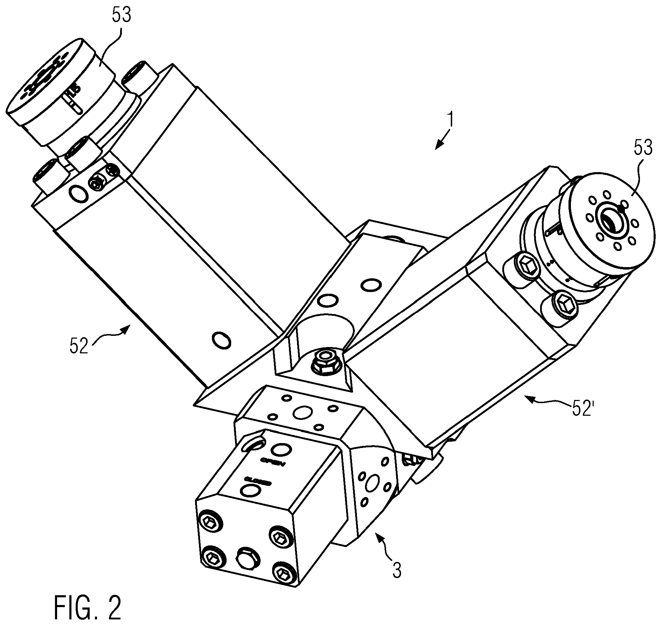

Fig. 2 shows a perspective external view of the mixing head 1 showing the perpendicular housing components of the delivery duct 20, the alternate delivery duct 20' and the mixing head body 3 housing the mixing chamber 2.

The switching operation of the switchable flow connection will be described in more detail below with reference to Figs. 3 to 7.

In the cross-sectional views of Figs. 3 and 4 the mixing spool 8 is open and the switchable flow connection is in a state in which output flow from the mixing chamber 2 is directed to the internal passageway 24 of the delivery duct 20, whereas the internal passageway 24' of the alternate delivery duct 20' is closed. In the cross-sectional view of Fig. 4 the sleeve 30 is, as in Fig. 1a), in the retracted open position and the spool 8 is in the retracted position so that the injected polymeric liquids are mixed in the mixing chamber 2, and the mixture is expelled through the output opening 4 of the mixing chamber and flows into the inclined gap 36. Since the rod 22 is retracted in the continuation of the internal passageway 24 formed within the sleeve 30, and the rod 22' within the internal passageway of the alternate delivery duct 20' is in the advanced position closing the internal passageway of the alternate delivery duct 20', output flow from the mixing chamber 2 flows in front of the front end face of rod 22 into the inclined gap 36 and from there further into the internal passageway 24 of the delivery duct 20 towards its output end. This situation is also illustrated Fig. 3 which is a partial cross-sectional view and a partial perspective view. The mixing chamber 2 is in the open condition with spool 8 retracted so that the polymeric liquids ejected by the injectors 6 are mixed in the mixing chamber 2 and are expelled through the output opening 4 of the mixing chamber 2 into the enlarged diameter end portion 26 of the internal passageway 24 of the delivery duct, namely into the inclined gap 36 described before in connection with Fig. 4. In Fig. 3 the output opening 4 is shown to communicate with the enlarged diameter end portion 26, and in a perspective manner also the internal passageway 24 of the delivery duct is visible inside the enlarged diameter end portion 26. The rod 22 is sufficiently retracted in the sleeve 30 so that the output flow through the output opening 4 of the mixing chamber 2 can flow into the enlarged diameter end portion 26 (in the area of the inclined gap 36 of Fig. 4) and from there further into the internal passageway 24 of the delivery duct, because rod 22 is sufficiently retracted in the sleeve 30, whereas the internal passageway of the alternate delivery duct is shown closed by the rod 22' in Fig. 3.

Fig. 5 shows an alternative state of the switchable flow connection in which output flow from the mixing chamber 2 is directed into the internal passageway 24 of the delivery duct. The adjusted state of the rod 22 in Fig. 5 differs from the state in Fig. 4 in that the rod 22 is slightly further advanced and is disposed with its front end face axially, by means of a stroke adjuster 53, in a position that is within the axial range covered the oppositely inclined end face 34 of the fixed sleeve section 33 so that the internal passageway 24 continued within interior of the fixed sleeve section 33 is partly open and not completely closed by the rod 22. In this state output flow from the mixing chamber 2 enters the inclined gap 36 and, because of the advanced positioning of the front end face of the rod 22 within the inclined gap 36, has first to flow around the circumferential surface of the rod 22 in the internal gap 36, before the fluid flow enters the internal passageway 24 of the delivery duct 20 through the fixed sleeve section 33. At the same time the rod 22' is in the advanced position in the internal passageway of alternate duct 20' so that the alternate delivery duct 20' is closed. Compared to the situation of Fig. 4, the output flow from the mixing chamber has to take a detour to flow through an annular channel within the inclined gap 36 around the circumferential surface of the rod 22, before reaching the internal passageway 24 of the delivery duct, wherein this flow diversion is advantageous because it calms downs the flow of the polymeric mixture that is expelled under high pressure through the output opening 4 of the mixing chamber 2.

The cross-sectional view of Fig. 6 shows the state in which the switchable flow connection and the rods 22, 22' are adjusted such that output flow from the mixing chamber (if the spool 8 would be retracted to open the mixing chamber) is directed into the internal passageway 24' of the alternate delivery duct 20'. As can be seen in Fig. 6 the piston connected to the rod 22 is advanced such that the rod 22 extends along the internal passageway of the delivery duct 20, thereby closing it. On the other hand, the rod of the alternate delivery duct 20' is sufficiently retracted so that the internal passageway 24' is visible in the cross-sectional view of Fig. 6 as an open circle. As can be seen in this cross-sectional view, the internal passageway of the delivery duct 20 and of the alternate delivery duct 20' are not extending with their longitudinal axes in the same plane, but the longitudinal axes of the delivery duct 20 and the alternate delivery duct 20' are shifted to such extent that the internal passageways themselves do not intersect, whereas the internal passageway 24' of the alternate delivery duct 20' intersects with the enlarged diameter end portion 26 of the delivery duct 20. This means that the internal passageway 24' of the alternate delivery duct 20' is in the plane of the cross-section shown in Fig. 6 open towards the enlarged diameter end portion 26 of the internal passageway of the delivery duct 20, namely in a region of a delivery duct opening 29 which is indicated in Fig. 6 by a dotted circle segment. In fact, the dotted circle segment in the region of the delivery duct opening 29 is open in the plane of cross-section of Fig. 6 so that fluid flow from the enlarged diameter end portion 26 into the internal passageway 24' of the alternate delivery duct 20' is possible, wherein the circle segment shown as dotted line is an indication of the output end opening of the internal passageway 24' at the output end of the alternate delivery duct 20' which is spaced apart from the plane of the cross-section of Fig. 6. Therefore, output flow from the mixing chamber flows through the inclined gap 36, in an annular channel around the circumferential surface of the rod 22 to the enlarged diameter end portion 26 in front of the inclined end face of the sleeve 30, and from there through the delivery duct opening 29 into the internal passageway 24' of the alternate delivery duct.

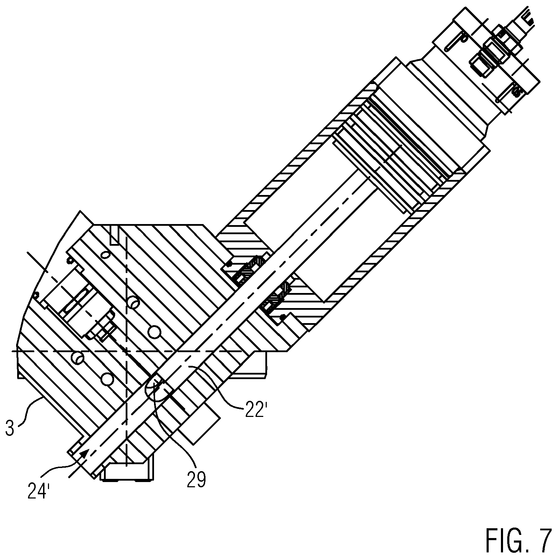

The same state of the switchable flow connection and of the positioning of the rods 22, 22' as in Fig. 6 is shown in the cross-section of Fig. 7, wherein the cross-sectional view of Fig. 7 is taken in the plane in which the longitudinal axis of the internal passageway 24' of the alternate delivery duct is extending. Accordingly, rod 22' of the alternate delivery duct is shown in the retracted position and keeps clear the delivery duct opening 29 towards the enlarged diameter end portion 26 of the internal passageway 24 of the delivery duct so that output flow from the mixing chamber flows through the inclined gap 36 (see Fig. 6), through the annular channel around the circumferential surface of the rod 22 in the delivery duct 20, and eventually flows through the enlarged diameter end portion 26 in front of the sleeve 30 through the delivery duct opening 29 into the internal passageway 24' of the alternate delivery duct.

As can be seen in the cross-sectional views of Figs. 4 - 6 the sleeve 30 is provided with a recess 40 in its front end surface in the region of the intersection with the internal passageway of the alternate delivery duct 20', wherein the recess 40 is of complementary shape to the portion of the rod 22' which, when the rod 22' is advanced to extend through the intersection zone with the enlarged diameter end portion 26 of the delivery duct 20, projects into the enlarged diameter end portion 26. The recess 40 allows that the sleeve 30 can be advanced to its closing position closing the mixing chamber and the internal gap 36, without interfering with the rod 22'.

Figs. 8 a) and b) show schematical perspective views of a second embodiment of a mixing head with a switchable flow connection. The configuration of the mixing chamber, the delivery duct and the alternate delivery duct is the same as in the first embodiment of Figs. 1 a) and b). In particular, the configuration of the internal passageway of the alternate delivery duct and the enlarged diameter end portion of the internal passageway of the delivery duct is the same as in the embodiment of Figs. 1 a) and b): They are intersecting and thereby form a delivery duct opening connecting the internal passageway of the alternate delivery duct with the enlarged diameter end portion of the delivery duct. The second embodiment of Figs. 8 a) and b) differs from the first embodiment in the shape of the front end face of the sleeve 30 which is not inclined, but has an annular frusto-conical end face 38. Furthermore, there is no opposing fixed sleeve section, but the end of the enlarged diameter end portion 26 of the internal passageway of the delivery duct is formed into the mixing head body 3 by an inwardly projecting shoulder extending circumferentially from the inner wall of the enlarged diameter end portion 26 to the inner wall of the internal passageway 24 of the delivery duct.

As in the first embodiment, the sleeve 30 is connected to a piston 50 of an actuator configured to move the sleeve 30 between a closing position in which it covers the output opening of the mixing chamber (Fig. 8 b)) and in which the front end face of the spool 8 of the mixing chamber faces the outer wall of the sleeve 30, and a retracted open position (Fig. 8 a)) in which the sleeve 30 leaves open at least part of the output opening of the mixing chamber so that output flow from the mixing chamber can enter an annular gap between the frusto-conical end face 38 of the sleeve 30 and the shoulder terminating the enlarged diameter end portion of the internal passageway of the delivery duct.

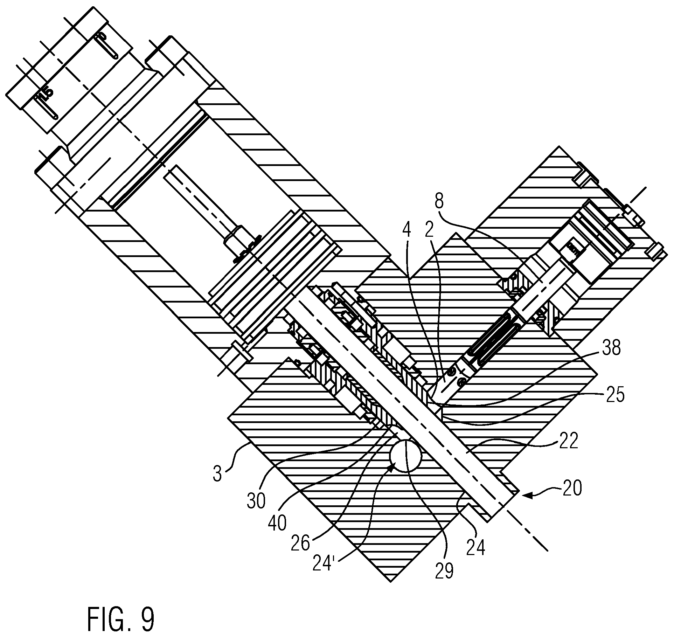

Fig. 9 shows a cross-section through the mixing head of the second embodiment taken in a plane in which the longitudinal axis of the delivery duct 20 extends and which is perpendicular to the longitudinal axis of the internal passageway 24' of the alternate delivery duct. In the state illustrated in Fig. 9 the piston connected to the rod 22 of the delivery duct 20 is advanced such that the rod 22 extends along the internal passageway 24 to the output end of the delivery duct 20. In Fig. 9 the mixing spool 8 is retracted so that the mixing chamber 2 is communicating, via its output opening 4, with the gap between the frusto-conical end face 38 of the retracted sleeve 30 and the opposing annular shoulder 25 terminating, as spart of the mixing head body 3, the enlarged diameter end portion 26 of the internal passageway 24. The gap and the advanced rod 22 form an annular flow path around the circumferential surface of the rod 22 to the enlarged diameter end portion 26 on the opposite side which is in the region of the delivery duct opening 29 in flow communication with the internal passageway 24' of the alternate delivery duct so that output flow from the output opening 4 flows through the gap formed in front of the retracted sleeve 30 and around the circumferential surface of the rod 22, and flows further through the delivery duct opening 29 into the internal passageway 24' of the alternate delivery duct.

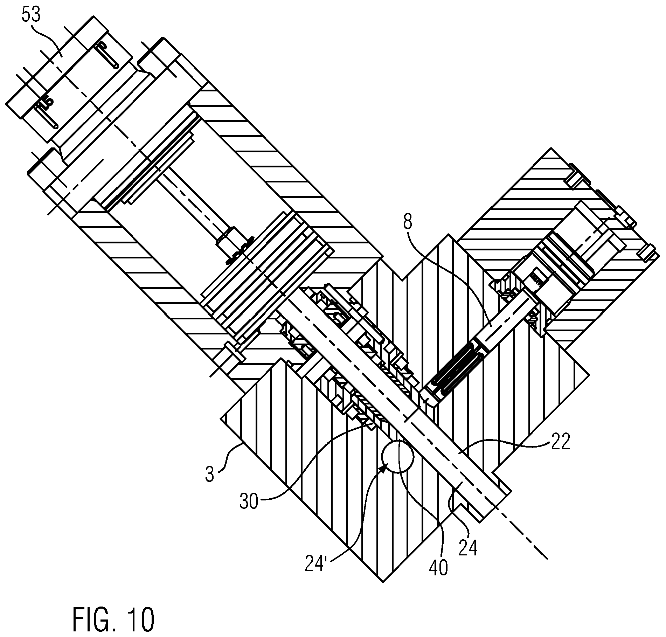

Fig. 10 shows a cross-sectional view of the same embodiment as in fig 9 but with the mixing spool closed and the sleeve 30 closed so to remove and expel the resin from the enlarged diameter portion, wherein the sleeve is closed after the mixing spool closed and before the rod 22 will close. In Fig. 10 the spool 8 is advanced to close the mixing chamber, and the sleeve 30 is advanced to its closing position (as in Fig. 8 b)) so that the frusto-conical end face of the sleeve 30 is in abutment on the complementary shaped annular shoulder terminating the enlarged diameter end portion, thereby completely closing the enlarged diameter end portion. In this state the advanced sleeve is with its recess 40 (see Fig. 9) moved to the delivery duct opening 29 (Fig. 9). As described before, the recess 40 in the front end face of the sleeve 30 has the purpose to avoid interferences between the sleeve 30 and the rod 22' of the alternate delivery duct. In the state of Fig. 10 the mixing chamber is closed and no output flow exists the mixing chamber.

Fig. 11 is a cross-sectional view of a further modification of the second embodiment which differs from the versions of second embodiment described before in the shape of the inner end face of the sleeve which in this case is a planar annular end face of the sleeve 30 opposing the planar annular shoulder 25 terminating the enlarged diameter end portion 26 of the internal passageway of the delivery duct 20. Also in this modified version of the second embodiment output flow from the output opening 4 of the mixing chamber flows through the gap between the inner end face of the sleeve 30 and the annular shoulder 25, in arcuate flow paths around the circumferential surface of the advanced rod 22 of the delivery duct 20, and to the delivery duct opening 29 connecting the enlarged diameter end portion 26 with the internal passageway 24' of the alternate delivery duct, thereby directing output flow from the mixing chamber 2 to the internal passageway 24' of the alternate delivery duct.

Fig. 12 is a cross-sectional view of a further modified version of the second embodiment, wherein in this case the annular shoulder terminating the enlarged diameter end portion 26 has an annular, frusto-conical shape, and the inner end face of the sleeve 30 is provided with an oppositely inclined, complementary inclined end face 38. In this manner a curved flow path through the gap formed between the end face 38 and the frusto-conical shoulder is formed as an annular flow channel around the circumferential surface of the rod 22 and further to delivery duct opening 29 the connecting the enlarged diameter end portion 26 with the internal passageway 24' of the alternate delivery duct, thereby directing output flow from the mixing chamber 2 to the internal passageway 24' of the alternate delivery duct.

In connection with the switching over the active output component from the delivery duct to the alternate delivery duct and vice versa, it is also possible and suitable to perform a cleaning operation of the volumes and ducts where reactive resins have flown before the switching to remove any cured polymeric coatings. After closing the mixing chamber 2 by advancing the spool 8, the control unit can be arranged to operate the actuator of the sleeve 30 to expel any resin residues form the an inclined gap 36 or from the gap between the frusto-conical end face 38 of the retracted sleeve 30 and the opposing shoulder 25, 25', and to advance the rod 22 to move throughout the internal passageway 24 of the delivery duct in order to expel the residual resin and to clean it. Thereafter, the control units can retract the rod 22' from the internal passageway 24', reopen the sleeve 30 and retract the mixing spool 8 to start the delivery of resin in the alternate delivery duct. This operation requests less than 2 seconds and preferably around 1 second. In alternative it is possible simply to retract the rod 22' of the alternate delivery duct 22' and close immediately thereafter the delivery duct 20 advancing the rod 22. In this sequence the delivery of the resin to the surfaces of the substrate of the panel is not interrupted

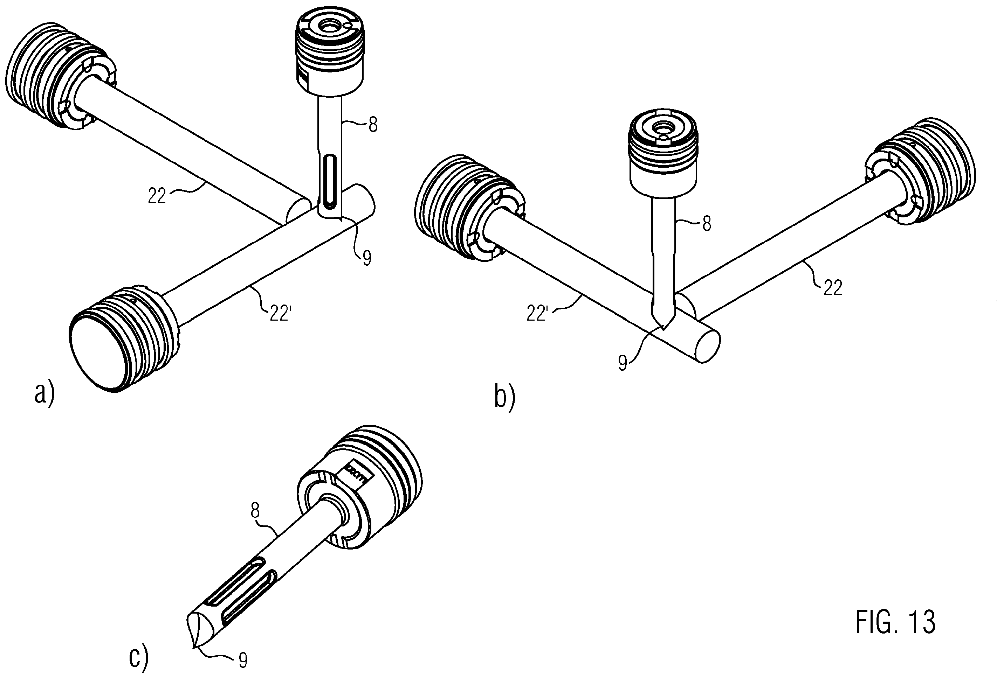

Figs. 13 a) and b) show schematical perspective views from two different points of view of a third embodiment of a mixing head with a switchable flow connection. The configuration is illustrated by the rod 22 of the delivery duct, the rod 22' of the alternate delivery duct, and by the spool 8 of the mixing chamber. In this embodiment the longitudinal axes of the internal passageways of the delivery duct and the alternate delivery duct extend in the same plane such that the internal passageways (surrounding the rods 22 and 22') are crossing each other in a crossing zone forming a cylinder-cylinder intersection. The longitudinal axis of the mixing chamber is extending perpendicular to the plane of the delivery duct and the alternate delivery duct, wherein the mixing chamber is positioned such that its output opening is merging into the crossing zone of the internal passageways. The output opening of the mixing chamber is not centered with respect to the intersection point of the longitudinal axes of the delivery duct and the alternate delivery duct, but is displaced along the bisecting line of the 90° angle between the delivery duct and the alternate delivery duct towards the output ends of the delivery duct and the alternate delivery duct. This configuration implies that only one of the rods 22, 22' can be advanced to extend through the crossing zone, in case of Figs. 13 a) and b) the rod 22' extends through the crossing zone, while the rod 22 can be advanced only up to the entry of the crossing zone.

The end surface of the mixing spool 8 opposite to the piston is shaped to fit to the cylinder-cylinder intersection of the crossing zone as can be seen in Fig. 13 c) which shows a perspective view the spool 8. The end surface of the spool has a central line separating two differently curved surface portions, wherein the central line corresponds to the line of the cylinder-cylinder intersection where the lateral surfaces of the two perpendicular cylinders meet, and each of the two adjacent surface portions corresponds to a lateral surface portion of one of the cylinders in the neighborhood of the cylinder-cylinder intersection. Since the longitudinal axis of the mixing chamber and of the spool is not centered on the intersection point of the longitudinal axes of the cylinders the end surface of the spool is not symmetrical and has an extension 9 which can also be seen in Figs. 13 a) and b). This extension 9 is necessary to expel, when the mixing spool closes, all the resin from the mixing chamber and from the intermediate space between the mixing chamber and the two delivery ducts and it extends into the intermediate space where the two cylindrical passageways of the delivery duct and the alternate delivery duct merge into the crossing zone, wherein due to the displacement this extension is directed in the direction of the bisecting line of the angle between the delivery duct and the alternate delivery duct towards their output ends.

The shape of the end surface of the spool 8 is as described above for the case that the diameter of the mixing chamber opening is smaller than the diameter of the intersecting cylinders and that the longitudinal axis of the mixing chamber is displaced as described above, which is the preferred arrangement. In principle, another design is possible in which the diameter of the mixing chamber opening is larger than the diameter of the intersecting cylinders and in which the longitudinal axis of the mixing chamber is centered on the intersection point of the longitudinal axis of the intersecting cylinders, but this alternative arrangement will not be described in further detail herein.

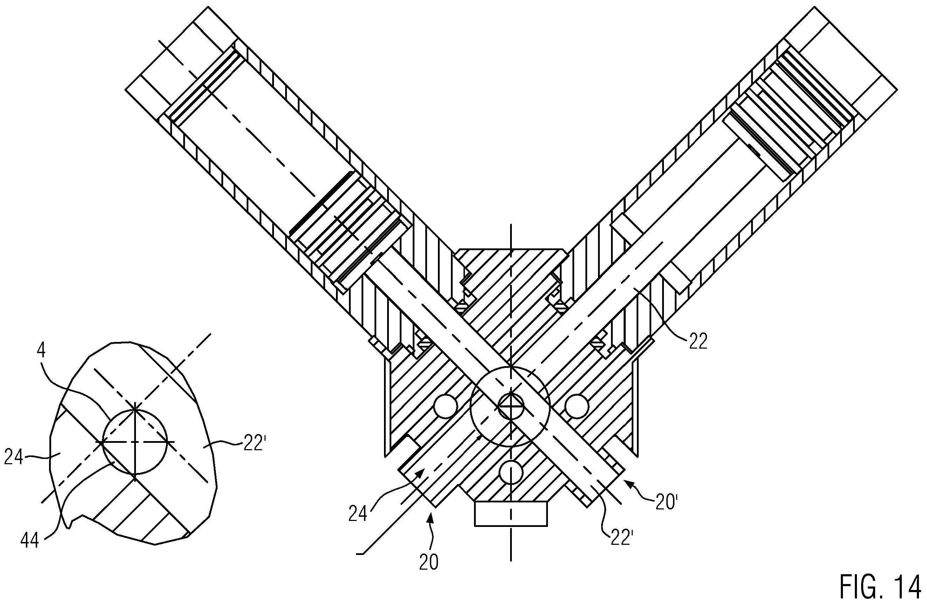

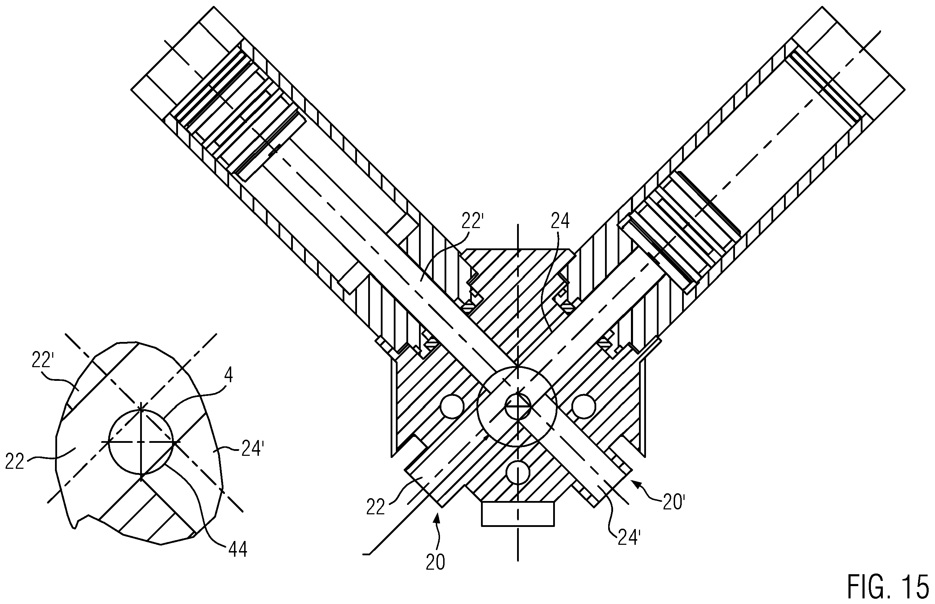

The design and operation of the third embodiment will be described with reference to the cross-sectional views of Figs. 14 and 15. These cross-sectional views are taken in the plane in which the longitudinal axes of the internal passageways 24, 24' extend. The mixing chamber extends perpendicular to the Figure plane above the Figure plane of Figs. 14 and 15. The output opening 4 of the mixing chamber (see enlarged detail in Figs. 14 and 15) merges into the crossing zone of the internal passageways 24, 24', wherein the output opening 4 is not centered on the intersection point of the longitudinal axes of the internal passageways 24, 24', but shifted with respect to this intersection point along the bisecting line of the 90° angle between the delivery duct 20 and the alternate delivery duct 20' (which is a shift downwards in the views of Figs. 14 and 15).

In the state of Fig. 14 the rod 22 of the delivery duct 20 is retracted so that it extends with its front end face only up to the crossing zone of the internal passageways 24, 24', whereas the rod 22' of the alternate delivery duct is advanced to extend through the crossing zone and up to the output end of the alternate delivery duct 20'. As shown in the enlarged detail on the lefthand side in Fig. 14, the displacement of the output opening 4 of the mixing chamber with respect to the crossing zone is such that a segment 44 of the cylinder-cylinder intersection forming the crossing zone of the internal passageways 24, 24' is open for or overlapping with the output opening 4 of the mixing chamber. Consequently, in the state of Fig. 14 output flow on the output opening 4 of the mixing chamber flows through the segment 44 into the section of the internal passageway 24 beyond the crossing zone and further towards the output end of the delivery duct 20.

In the state of Fig. 15 the roles of the rods 22, 22' are reversed, and in this case the rod 22' of the alternate delivery duct 20' is retracted so that it extends only up to the crossing zone, whereas the rod 22 of the delivery duct is advanced to extend through the crossing zone and up to the output end of the delivery duct 20. For this positioning of the rods 22, 22' there is also a segment 44 of the cylinder-cylinder intersection forming the crossing of the internal passageways 24, 24' which is open towards the output opening 4 of the mixing chamber, wherein in this case this segment 44 communicates with the section of the internal passageway 24' of the alternate delivery duct so that output flow from the output opening 4 of the mixing chamber is directed to the internal passageway 24' of the alternate delivery duct 20' to flow towards its output end.

The switchable flow connection in this embodiment is formed by the crossing zone of the internal passageway 24, 24' in cooperation with the displaced disposition of the output opening 4 of the mixing chamber with respect to the intersection point of the longitudinal axis of the internal passageways 24, 24', wherein switching of the switchable flow connection is achieved by switching the positioning of the rod 22, 22' from one of the rods 22, 22' from extending through the crossing zone to the other of the rods 22, 22' to extend through the crossing zone. For example, for switching over delivery of the reactive mixture from being delivered through the delivery duct to delivery through the alternate delivery the following steps are performed. For the interruption of the delivery, the mixing spool 8 closes the mixing chamber, then the rod of the alternate delivery duct that is closed shall open so that the delivery duct, that was delivering the flow of resin and is also open, can be closed by advancing its rod which thereby expels residuals of resins, and then the mixing chamber can reopen to complete the switching of the flow to the alternate delivery duct.

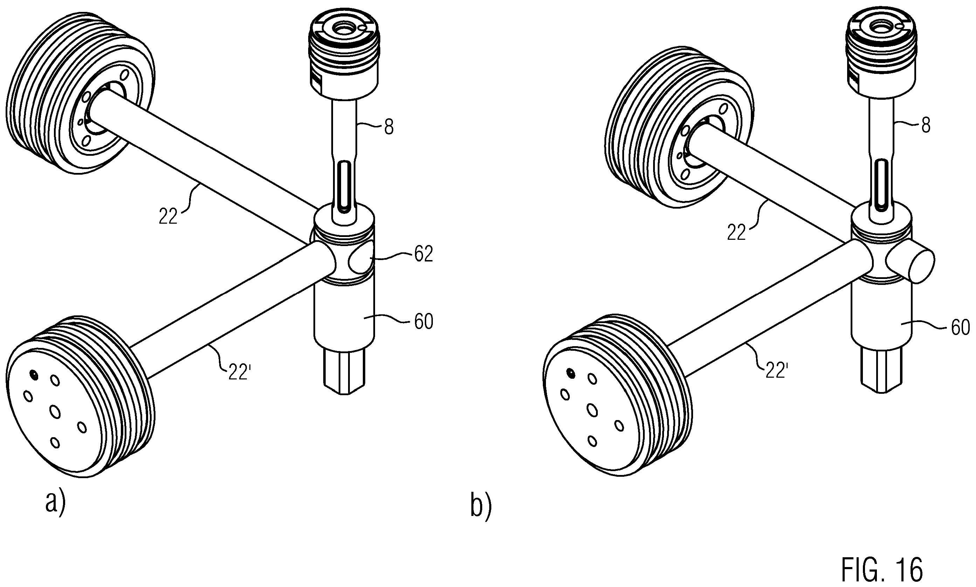

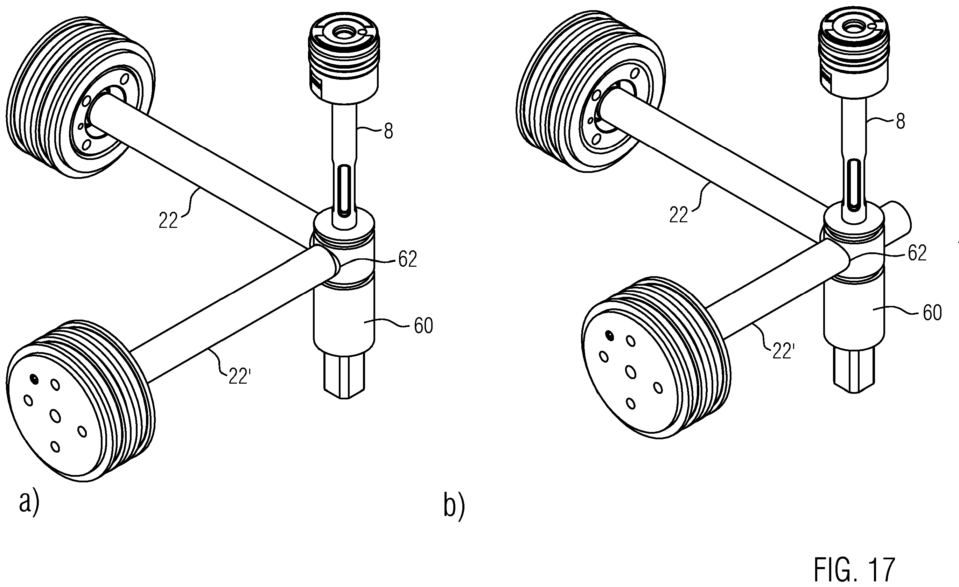

Figs. 16 a) and b) and 17 a) and b) show schematical perspective views of a fourth embodiment of a mixing head with a switchable flow connection. Also in this embodiment the longitudinal axis of the internal passageway 24, 24' (surrounding the rods 22, 22' of the delivery duct and the alternate delivery duct) are extending in the same plane, and the mixing chamber is extending with its longitudinal axis perpendicular to the plane of the delivery duct and the alternate delivery duct. A cylindrical cavity intersects, with its cylinder axis extending perpendicular to the plane of the longitudinal axis of the delivery duct and the alternate delivery duct, with the intersection point of these longitudinal axes. In this cylindrical cavity a cylindrical flow diverter 60 is mounted as a part of the switchable flow connection with its cylinder axis coaxial with the cylinder axis of the cylinder cavity and of the mixing chamber. The cylindrical flow diverter is mounted in the cylindrical cavity to be rotatable about its cylinder axis, and it is with its cylinder axis aligned with the longitudinal axis of the mixing chamber. The cylindrical flow diverter 60 comprises a throughgoing transverse opening 62 forming in the state of Figs. 16 a) and b) a continuation of the internal passageway in which the rod 22 of the delivery duct extends, so that the rod 22 can be advanced (see Fig. 16 b)) to move through the throughgoing transverse opening 62 of the cylindrical flow diverter 60 to expel the resin and clean the throughgoing transverse opening 62 and the delivery duct that is aligned with the throughgoing transverse opening 62. In the state of Figs. 17 a) and b) the cylindrical flow diverter 60 has been rotated by 90° about its cylinder axis so that the throughgoing transverse opening 62 now forms a continuation of the internal passageway in which the rod 22' of the alternate delivery duct.

The cylindrical flow diverter 60 further comprises an input opening which is communication with the output opening of the mixing chamber (in the views of Figs. 16-17 a) and b) the input opening of the cylindrical flow diverter 60 is below the lower end face of the spool 8 of the mixing chamber). The input opening of the cylindrical flow diverter 60 is in flow communication with the throughgoing transverse opening 62 of the cylindrical flow diverter.

If the cylindrical flow diverter 60 is rotated such that its throughgoing transverse opening 62 is aligned with the internal passageway of one of the delivery duct and the alternate delivery duct, and the rod of this one of the delivery duct and the alternate delivery duct is retracted from extending through the throughgoing transverse opening, there is flow communication between the output of the mixing chamber, through the input opening, and the throughgoing transverse opening of the cylindrical flow diverter 60 further into the internal passageway of the one of the delivery duct and the alternate delivery duct.

For switching the switchable flow connection the cylindrical flow diverter 60 is rotated under control of the control unit to be aligned with the internal passageway of the other one of the delivery duct and alternate delivery duct, thereby switching the output flow from the output opening of the mixing chamber to flow into the internal passageway of the other one of the delivery duct and the alternate delivery duct.

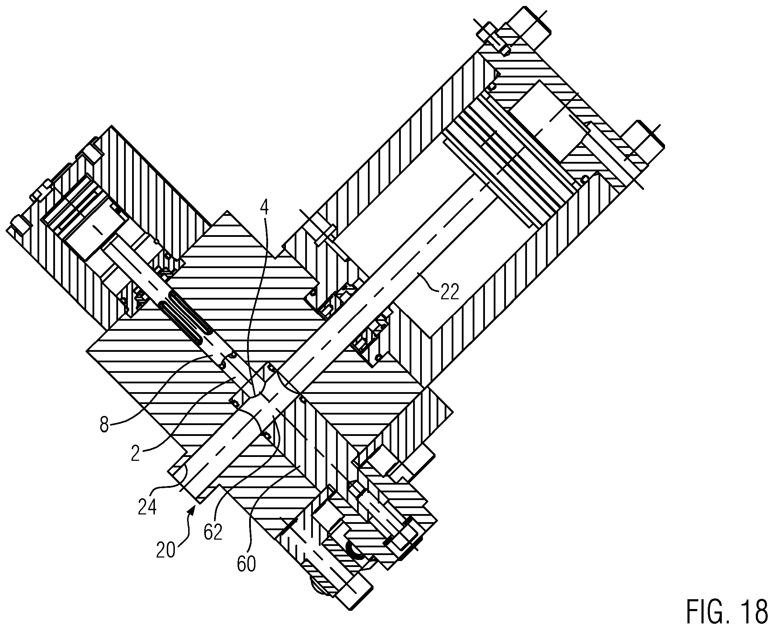

The design of the fourth embodiment of the mixing head is shown in more detail in the cross-sectional view of Fig. 18 which is taken in the plane in which the longitudinal axes of the internal passageway 24 of the delivery duct 20 and of the mixing chamber 2 extend. The spool 8 of the mixing chamber 2 is in the retracted position so that the mixing chamber 2 is open to form and eject polymeric mixture from its output opening 4. The output opening 4 of the mixing chamber is in flow communication with an input opening of the cylindrical flow diverter 60, which input opening in turn is in flow communication with the throughgoing transverse opening 62 of the cylindrical flow diverter 60. In the state illustrated in Fig. 18 the rod 22 of the delivery duct 20 is retracted such that it does not extend through the throughgoing opening 62 so that output flow from the mixing chamber 2 flows through the input opening of the cylindrical flow diverter 60 and further through the throughgoing transverse opening 62 of the cylindrical flow diverter 60 and into the aligned internal passageway 24 of the delivery duct.

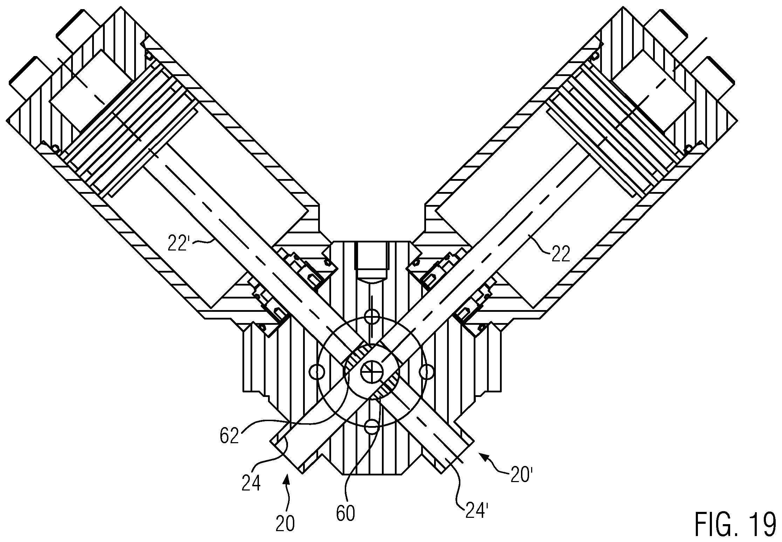

The cross-sectional view of Fig. 19 shows the same configuration and adjustment of the cylindrical flow diverter 60 in a cross-section taken in the plane defined by the longitudinal axes of the internal passageways 24, 24'. As can be seen in the cross-sectional view of Fig. 19 the throughgoing passageway 62 of the cylindrical flow diverter 60 is aligned with the internal passageway 24 of the delivery duct 20 so that output flow from the mixing chamber entering the input opening of the cylindrical flow diverter 60 is directed by the cylindrical flow diverter 60 to flow into the internal passageway 24 of the delivery duct 20.

To switch the switchable flow connection of this fourth embodiment of the mixing head, the spool 8 of the mixing chamber 2 is advanced to close the mixing chamber, the opened cleaning rod 22 is closed to expel the remaining resin form the internal passageway 24 and then reopened, whereafter the cylindrical flow diverter 60 is rotated under the control of the control unit by 90° to align the throughgoing transverse opening 62 with the internal passageway 24' of the alternate delivery duct 20'. Thereafter, the mixing chamber is activated again by retracting the spool 8 so that output flow from the output opening of the mixing chamber flows through the input opening and the throughgoing transverse passageway 62 of the cylindrical flow diverter 60 into the internal passageway 24' of the alternate delivery duct 20' to shift the flow from the delivery duct to the alternate delivery duct.

In connection with the above-described switching over it is also possible and suitable to perform a cleaning operation of the volumes and ducts where the reactive resins have flown before the switching. After closing the mixing chamber 2 by advancing the spool 8, the control unit can be arranged to operate the actuator of the rod 22 to advance the piston and the rod 22 to move the front end face of the rod 22 through the throughgoing transverse opening 62 and the adjoining section of the internal passageway 24 of the delivery duct in order to clean the throughgoing transverse opening 62 and the adjoining section of the internal passageway 24 of the delivery duct by pushing out any cured polymeric coatings from the throughgoing transverse opening 62 and the internal passageway 24. Thereafter, the control unit retracts the rod 22 again from the throughgoing transverse opening 62. Thereafter, the control unit can continue with the rotation of the cylindrical flow diverter to align the throughgoing transverse opening 62 with the internal passageway 24' of the alternate delivery duct 20'.

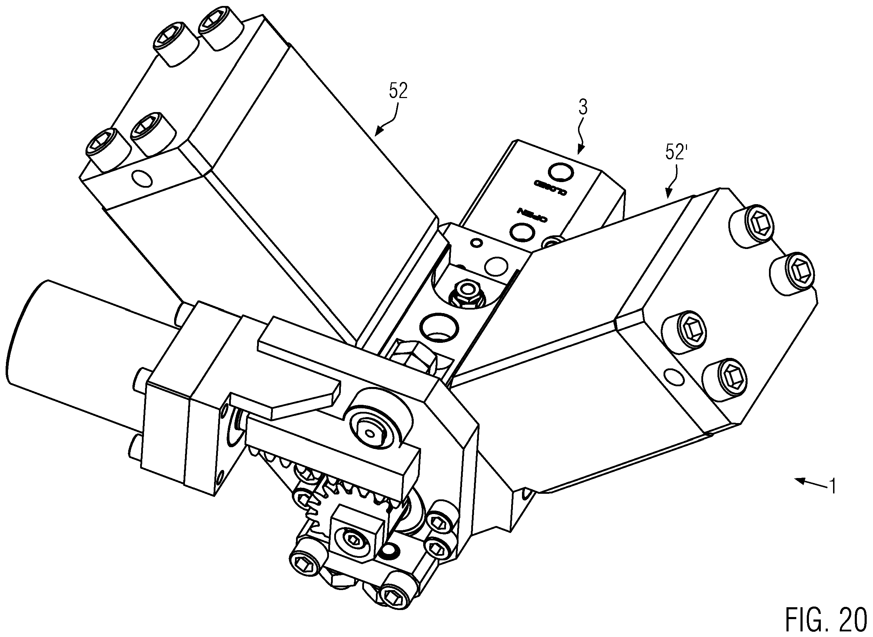

Fig. 20 shows an external view in axonometry of a mixing head according to the fourth embodiment. The mixing head 1 comprises the mix head body housing parts for the mixing chamber 2, the cylinders 52 and 52' where the head piston 50 moves controlling the movement of the rod 22 sliding in the delivery duct 20 and of the rod 22' sliding in the alternate delivery duct 20'. Also shown is a rotational actuator for rotating the cylindrical flow diverter between the aligned states with the internal passageways of the delivery duct and the alternate delivery duct. In the example shown the rotational actuator comprises a rack and pinion drive for driving the rotational movement of the cylindrical flow diverter between the aligned states with the delivery duct and the alternate delivery duct. However, also other kinds of rotational actuators can be used, for example a hydraulic motor, an electric motor and a gear box, etc..

The switching of the output reactive polymeric mixture from the delivery ducts to the alternate delivery ducts is adopted to permit the replacement of the set of distributors 70 of the delivery ducts. The switching of the outputting ducts permits the replacement of the set of distributors 70 connected to the delivery ducts that have delivered the reactive mixture in the continuous production period before the before switching over output from the delivery ducts to the alternate delivery ducts.

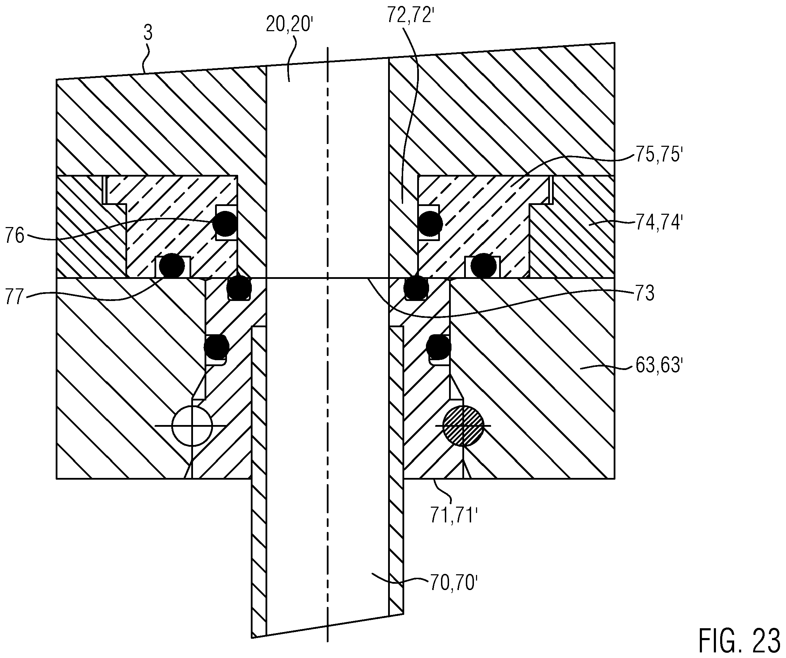

As already described in the introduction, the distributors can have various configurations to better distribute the resin on the substrate, as an example a distributor is considered that divides the outflow of resin into two flows before delivering it to the surface. As an example, the internal passageway 24 of the delivery duct 20 is continued in a sleeve 72 (see Fig. 23) attached to the mixing head body or machined directly as the output end of the delivery duct 20. The tubular end portion of the disposable plastic distributor 70 is connected to this sleeve and can be disconnected therefrom for replacement.

As already described in the introduction, the application of high-pressure mixing heads equipped with two crossed self-cleaning delivery ducts (delivery duct and alternate delivery duct) and a common mixing chamber, in continuous depositing of polymeric foam on a substrate advanced by a conveyor, makes it possible to avoid the application of two groups of mixing heads and the related supporting systems and the hydraulic and electric switching systems.

This configuration makes the best performance when complemented by a mechanism for the automatic replacement of distributors which are distributing the foam output from the delivery ducts on the advancing substrate. In the absence of automatic replacement mechanisms, the disposable distributors can in principle also be replaced manually by an expert operator without interrupting the supply, but this operation should be performed over the foam deposition area during foaming, or alternatively after stopping the operation mixings heads to proceed with the replacement of the distributors in safe conditions.

Two automatic systems that allow the automatic removal of the disposable distributors for their replacement in safe conditions and avoiding to stop the production are described below.

There are many types of distributors for polymeric mixtures, for example a type equipped with two branches of distribution ducts. However, the distributors can have three or more branches or can be shaped like tubes provided with many small holes placed in parallel, and many others which are part of the known art. It is as well known, that the distributors can be made of metal to be reused or of moulded plastic to be disposable.

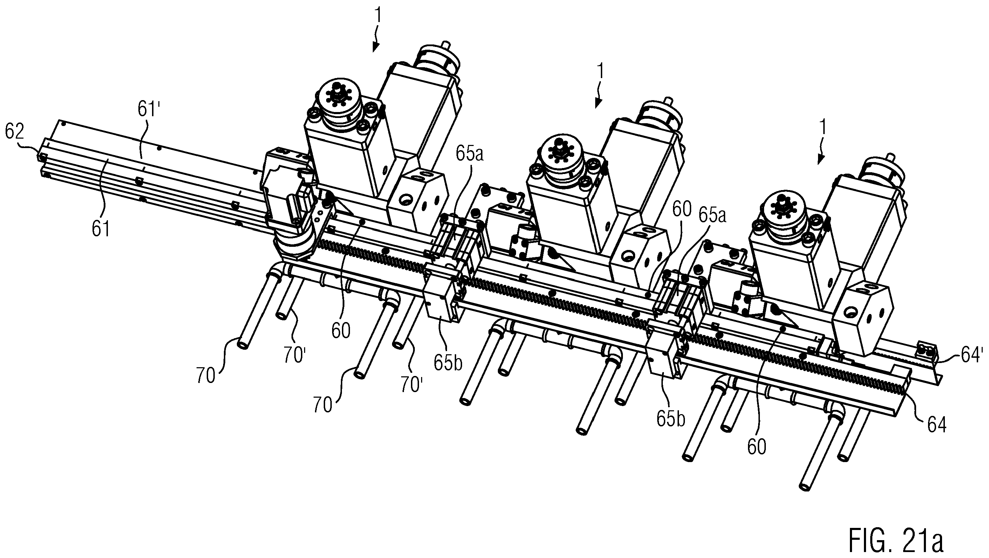

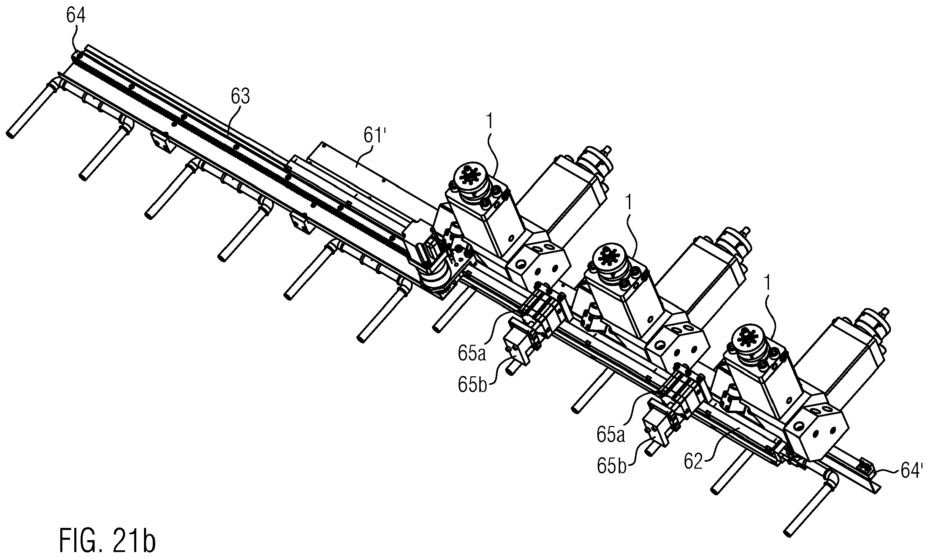

The three mixing head assembly of Figs. 21a and 21b comprises of two sets (one per side) of three distributors 70 and 70', wherein a first set is associated with the delivery ducts 20 and the other with the alternate delivery ducts 20' of the three mixing heads 1. Each of the sets can be detached from the mixing heads and be displaced, in transverse direction to the conveying direction of the substrate on which the foam is deposited, to move it out of the region above the substrate for the automatic replacement of the distributors.

In Figs. 21a and 21b a longitudinal structure is holding three mixing heads 1 configured each with two switchable delivery ducts, namely a delivery duct and an alternate delivery duct as in the embodiments described. The longitudinal structure comprises two longitudinal sides 60, 60' extending along the range in which the three mixing heads 1 are disposed spaced apart from each other, and two lateral sections 61, 61' outside the mixing head range. To the longitudinal sides 60, 60' longitudinal guides 62, 62' are fixed by which other two structures 63, 63' (see also Figs. 21a, 21b, 22 and 23) configured as bars 63, 63' are guided to be slidably moved in transverse direction when racks 64, 64' are driven. Each bar is holding one of the two sets of distributors 70, 70' set in position by pneumatic actuators 65a, 65b by which the front end 71, 71' of each distributor can be coupled/decoupled with/from the outlet end of the delivery ducts/alternate delivery ducts of the mixing heads 1.

In Fig 21a the two sets of distributors 70, 70' are shown positioned and coupled with the respective delivery ducts of the assembly of three mixing heads 1 mounted in parallel. The mixing heads 1 are represented without the connection hoses and just with the blocks for the hose's connection on their sides.

In Figs. 21a and 21b are also shown the two pneumatic actuators 65a fixed to each of the two sliding frames and spaced in position to stop in front of the respective delivery duct to which each actuator, by means of a clamping or inserting device 65b can hold each disposable distributor and pull or insert the entrance end of each distributor against or around the outlet end of the delivery duct/alternate delivery duct. When the front end of the delivery duct of the mixing head is flat the entrance of the distributor can be pulled against a flat surface, while, when it is configured as a sleeve, the entrance end of the disposable distributor can be inserted/disinserted around it. An extraction and sealing arrangement 71, 71' permits to extract the three disposable distributors outside the foaming zone while the other three are continuing the foaming.

A transversal extraction movement permits to shift the position of the holding bars 63, 63', each holding a set of three distributors 70 or 70', to move a set of three disposable distributors away from the foaming zone. Each extraction rack 64, 64' is equipped with an electrical or hydraulic or pneumatic driven motor that controls its lateral extraction according to a movement parallel to the arrangement of the mixing heads. Each of the two racks 64, 64' is connected to one of the holding bars 63, 63' that slide along guides 62, 62' applied to the frame fixing the mixing heads. Other types of extraction actuators can be utilized, such as axial actuators that are hydraulically, electrically or pneumatically controlled.

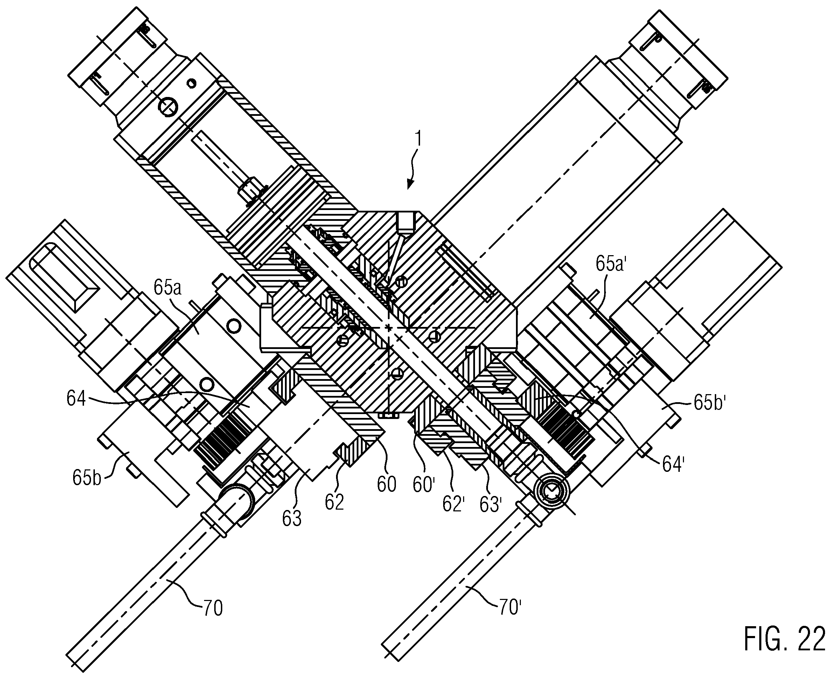

In Fig. 22 guides and pads are configured as a simple sliding mechanism. But the guides and pads can also slide on brass bushes or Teflon pads or on shaped rollers or on recirculating ball bearing pads. Fig. 22 shows that one of the types of distributor has an axial supply while the other which has the same dispensing inclination requesting the addition of a perpendicular part of disposable duct. The disposable distributors 70, 70', taken as an example, are equipped with two channels which divide the flow of each head in two and all are oriented in the direction of movement of the flexible containment substrate of the panel (normally paper reinforced with some fibre) on which they dispense the polymeric mixture.

Fig. 23 is an enlarged cross-section of a sliding connection between the front (outlet) end of the mixing head sleeve 72,72' and the entrance end 73,73' of the disposable distributor 70, 70'. The disposable distributor 70, 70' is glued to a sealing sleeve 71, 71' provided with seals that seal the connection with the sliding structures 63, 63' that hold the distributors and permit to shift them from the connection position to the lateral extraction position, and with the front of the mixing head sleeve 72, 72' at the exit of the delivery duct 20, and the alternate delivery duct 20'. A plastic part 75, 75', made of slidable plastic, encircles the mix head sleeve 72, 72' and is provided with a circular drill fitting with the mixing head sleeve 72, 72' and with a circular seal 76, and a front seal 77. It is connected to the mixing head body by a bracketing part 74, 74'. When the disposable distributor shall be replaced, the rod 22 closes the delivery duct and expels the reactive resins from the delivery duct 20 up to the front of the replaceable sleeve connected to the distributor forming a flat surface against which the sliding parts can slide for the extraction movement eventually waiting that the reactive resin becomes polymerized inside the disposable distributor parts.

## Claims

1. High pressure mixing head (1) for continuously producing polymeric foam, comprising
a body (3) including a mixing chamber (2) and injectors (6) for injecting at least two polymeric liquids, wherein a spool (8) is moveable in the mixing chamber in a longitudinal direction thereof between a retracted position in which the injectors (6) are able to inject jets of polymeric liquids into the mixing chamber (2) to be mixed under turbulent conditions so that a reactive polymeric mixture is expelled from an output opening (4) of the mixing chamber, and an advanced position in which the spool (8) is advanced in the mixing chamber (2) beyond the injectors (6) and the polymeric liquids from the injectors are returned to be recycled via recycling channels, and
a delivery duct (20) which is disposed transversely to the mixing chamber (2), wherein a rod (22) is slidably received in an internal passageway (24) of the delivery duct and is connected to a piston (51) of an actuator configured to move the rod along a longitudinal axis of the delivery duct between a retracted position in which the internal passageway (24) along the delivery duct is in flow communication with the mixing chamber (2) to receive the reactive polymeric mixture expelled from the output opening (4) for conveying it along the internal passageway (24) and into a distributor (70) connected to an output end of the delivery duct (20) for dispensing the polymeric foam resulting from the reactive polymeric mixture, and an advanced position in which it is moved all along the internal passageway (24) for cleaning it, wherein the rod (20) is of complementary cross-sectional shape to the internal passageway (24) of the delivery duct (20) so that it closes the internal passageway (20) up to the position it is moved to,
**characterized in that** an alternate delivery duct (20') having the same features and functionality as the delivery duct (20) is provided which extends transversely to the delivery duct (20) and to the mixing chamber (2), and **in that** the delivery duct (20) and the alternate delivery duct (20') are in flow communication with the mixing chamber (2) via a switchable flow connection, and a control unit is configured to control the switchable flow connection and the positions of the rods (22, 22') in the delivery duct (20) and the alternate delivery duct (20') such that flow from the output opening (4) of the mixing chamber can be selectively directed either to the delivery duct (20) or to the alternate delivery duct (20').

2. High pressure mixing head (1) according to claim 1, **characterized in that** the switchable flow connection is formed by an enlarged diameter end portion (26) of the internal passageway (24) of the delivery duct (20) and by a sleeve (30) slidably received therein, wherein the enlarged diameter end portion (26) extends from the end of the delivery duct opposite to its output end and extends along the internal passageway (24) beyond the output opening (4) of the mixing chamber (2) such that the enlarged diameter end portion (26) is in flow communication with the output opening (4) of the mixing chamber, wherein the sleeve (30) received in the enlarged diameter end portion (26) has an internal diameter equal and fitting to the internal diameter of the remaining internal passageway (24) of the delivery duct (20) and wherein the sleeve (30) is movable within the enlarged diameter end portion (26) between a closing position in which it covers the output opening (4) of the mixing chamber and a retracted open position in which it leaves open at least part of the output opening (4) of the mixing chamber to allow flow from the mixing chamber into the enlarged diameter end portion (26), and **in that** the longitudinal axes of the delivery duct (20) and the alternate delivery duct (20') do not extend in in a common plane, but are shifted, in a direction perpendicular to the longitudinal axes of the delivery duct and the alternate delivery duct, with respect to each other to such extent that the enlarged diameter end portion (26) of the delivery duct (20) and the internal passageway (24') of the alternate delivery duct (20') intersect, thereby forming a delivery duct opening (29) for flow communication between the enlarged diameter end portion (26) of the delivery duct (20) and the internal passageway (24') of the alternate delivery duct (20'), such that when the control unit controls the positioning of the sleeve (30) to be in the open position, output from the mixing chamber (2) is directed to the delivery duct (20) by positioning the rod (22) of the delivery duct to open its internal passageway (24) and by positioning the rod (22') of the alternate delivery duct (20') to close its internal passageway (24'), whereas output from the mixing chamber is directed to the alternate delivery duct (20') by positioning the rod (22') of the alternate delivery duct (20') to open its internal passageway (24') and by positioning the rod (22) of the delivery duct (20) to close its internal passageway (24).

3. High pressure mixing head (1) according to claim 2, **characterized in that** the delivery duct opening (29) is located, in flow direction through the delivery duct (20), downstream of the output opening (4) of the mixing chamber (2).

4. High pressure mixing head (1) according to claim 3, **characterized in that** the sleeve (30) has an inclined inner end face (32) and that a longitudinal inner end region of the enlarged diameter end portion is provided with an oppositely inclined end face (34) facing the inclined end face (32) of the sleeve (30) such that, when the sleeve (30) is moved to the closing position, its inclined end face (32) is in abutment on the oppositely inclined end face (34) of the inner end region and such that, when the sleeve (30) is moved to its retracted open position, an inclined gap (36) is formed between the inclined inner end face (32) of the sleeve and the oppositely inclined end face (34) of the inner end region, which inclined gap (36) forms, when the rod (22) of the delivery duct is closing its internal passageway, an inclined annular flow path from the output opening (4) of the mixing chamber (2), around the rod (22) of the delivery duct to the delivery duct opening (29) and into the alternate delivery duct (20').

5. High pressure mixing head (1) according to claim 4, **characterized in that** the retracted position of the rod (22) of the delivery duct (20) is adjustable to a partial closing position in which its front end face is located downstream of the mixing chamber output opening (4) and within the inner end region of the enlarged diameter end portion (26), such that, when the sleeve (30) is in the retracted open position, and when the rod (22) of the delivery duct (20) is in the partial closing position and the rod (22') of the alternate delivery duct (20') is in its advanced position closing its internal passageway (24'), fluid flow from the output opening (4) of the mixing chamber is flowing through the inclined gap (36) around the rod (22) of the delivery duct (20) and into the inner end region (27) of the enlarged diameter end portion (26) and from there continues into the adjoining internal passageway (24) of the delivery duct (20).

6. High pressure mixing head according to claim 3, **characterized in that** the sleeve (30) has a frustro-conical end face (38) that can be either outwardly inclined or inwardly inclined , such that between the frustro-conical end face and an annular complementary frustro-conical shoulder terminating the enlarged diameter end portion (26) of the internal passageway (24) of the delivery duct (20), when the sleeve (30) is in its retracted open position, an annular gap is formed, which annular gap forms, when the rod (22) of the delivery duct (20) is closing its internal passageway (24), an annular flow path around the rod (22) of the delivery duct (20) from the output opening (4) of the mixing chamber to the delivery duct opening (29) and into the alternate delivery duct, or **in that** the sleeve (30) has a flat end face such that between the flat end face and an complementary flat annular shoulder terminating the enlarged diameter end portion (26) of the internal passageway (24) of the delivery duct (20) an annular gap is formed, which annular gap forms, when the rod (22) of the delivery duct (20) is closing its internal passageway (24), an annular flow path around the rod (22) of the delivery duct (20) from the output opening (4) of the mixing chamber to the delivery duct opening (29) and into the alternate delivery duct.

7. High pressure mixing head (1) according to any of the claims 2 - 6, **characterized in that** the inner end face of the sleeve (30) is provided with a recess (40) of complementary shape to a portion of the surface of the rod (22') of the alternate delivery duct (20') projecting through the delivery duct opening (29) into the enlarged diameter end portion (26) of the internal passageway (24) of the delivery duct (20) when the rod (22') is closing the alternate delivery duct (20') such that movement of the sleeve (30) to its closing position is not obstructed and such that the projecting portion of the rod (22) of the alternate delivery duct (20') is received in the recess (40) of the inner end face of the sleeve (30) when it reached its closing position.

8. High pressure mixing head (1) according to any of the claims 2 - 7, **characterized in that** the sleeve (30) is connected to a pneumatic or hydraulic actuation piston (50) for selectively moving the sleeve (30) between the retracted position and the closing position under the control of the control unit, wherein the sleeve (30), when it is moved from the retracted open position to the closing position, acts as a cleaning member for the enlarged diameter end portion (26) of the internal passageway (24) to expel any resin residues to the delivery duct (20) or alternate delivery duct (20').

9. High pressure mixing head (1) according to claim 1, **characterized in that** the delivery duct (20) and the alternate delivery duct (20') are extending with their longitudinal axes in the same plane such that the internal passageways (24, 24') of the delivery duct and the alternate delivery duct are crossing each other in a crossing zone, and **in that** the longitudinal axis of the mixing chamber (2) is inclined by less than 20° with respect to a normal of the plane of the delivery duct and the alternate delivery duct, such that the output opening (4) of the mixing chamber is merging into the crossing zone of the internal passageways (24, 24') of the delivery duct (20) and the alternate delivery duct (20'), wherein the output opening (4) of the mixing chamber is not centered with respect to the intersection point of the longitudinal axes of the delivery duct (20) and the alternate delivery duct (20'), but it is displaced along the bisecting line of the 90° angle between the delivery duct (20) and the alternate delivery duct (20') towards the output ends of the delivery duct and the alternate delivery duct to form an overlapping portion of the output opening (4) of the mixing chamber with the internal passageway of each of the delivery duct (20) and the alternate delivery duct (20') to form the switchable flow connection that directs flow from the output opening (4) of the mixing chamber around the rod (22') of the alternate delivery duct (20') into the internal passageway (24) of the delivery duct beyond the crossing zone when the rod (22') of the alternate delivery duct (20') is positioned to extend through the crossing zone and the rod (22) of the delivery duct (20) is positioned to extend up to the rod (22') of the alternate delivery duct (20'), and that directs output flow from the mixing chamber (2) around the rod (22) of the delivery duct (20) into the internal passageway (24') of the alternate delivery duct (20') beyond the crossing zone, when the rod (22) of the delivery duct (20) is positioned to extend through the crossing zone and the rod (22') of the alternate delivery duct (20') is positioned to extend up to the rod (22) of the delivery duct (20).

10. High pressure mixing head (1) according to claim 9, **characterized in that** the longitudinal axis of the mixing chamber (2) is extending in a plane that is perpendicular to the plane of the delivery duct and the alternate delivery and that includes the bisecting line between delivery duct (20) and the alternate delivery duct (20').

11. High pressure mixing head (1) according to any of the preceding claims, **characterized in that** the delivery duct (20) and the alternate delivery duct (20') are extending with their longitudinal axes in the same plane with their longitudinal axes forming an angle of 90°±20° with each other.

12. High pressure mixing head (1) according to any of the claims 9 - 11, **characterized in that** the displacement of the output opening (4) of the mixing chamber with respect to the intersection point of the longitudinal axes of the delivery duct (20) and the alternate delivery duct (20') and the diameters of the output opening (4) of the mixing chamber and of the internal passageways (24, 24') of the delivery duct (20) and the alternate delivery duct (20') are such that, when the rod (22) in the delivery duct (20) extends through the crossing zone, a segment (44) of the cylinder-cylinder intersection forming the crossing zone of the internal passageways (24, 24') is open for the output opening (4) of the mixing chamber and communicating with the internal passageway section of the alternate delivery duct (20') beyond the crossing zone, and such that, when the rod (22') in the alternate delivery duct (20') extends through the crossing zone, a segment (44) of the cylinder-cylinder intersection is open for the output opening (4) of the mixing chamber and communicating with the internal passageway (24) section of the delivery duct (20) beyond the crossing zone.

13. High pressure mixing head (1) according to claim 1, **characterized in that** the delivery duct (20) and the alternate delivery duct (20') are extending with their longitudinal axes in the same plane, and **in that** a cylindrical cavity intersects, with its cylinder axis extending perpendicular to the plane defined by the longitudinal axes of the delivery duct and the alternate delivery duct, with the intersection point of both longitudinal axes, **in that** a cylindrical flow diverter (60), as part of the switchable flow connection, is located in the cylindrical cavity with its cylinder axis coaxial with the cylinder axis of the cylindrical cavity, wherein the cylindrical flow diverter (60) is rotatable around its cylinder axis and is with its cylinder axis aligned with the longitudinal axis of the mixing chamber (2) and wherein the cylindrical flow diverter (60) comprises a throughgoing transverse opening (62) forming a continuation of the internal passageway of the delivery duct (20) and of the alternate delivery duct (20'), respectively, the flow diverter (60) is, under control of the control unit, rotated so that its throughgoing transverse opening (62) is aligned with the internal passageway of delivery duct (20) and of the alternate delivery duct (20'), respectively, the cylindrical flow diverter (60) further comprising an input opening which is in communication with the output opening (4) of the mixing chamber (2) and which communicates with the throughgoing transverse opening (62), such that, when the rods of the delivery duct and the alternate delivery duct are retracted to keep the throughgoing transverse opening (62) open for fluid flow from the input opening to the throughgoing transverse opening (62), the switchable flow connection is delivering output flow from the mixing chamber (2) to the delivery duct (20) when the cylindrical flow diverter (60) is rotated to be, with its throughgoing transverse opening (62), aligned with the internal passageway (24) of the delivery duct (20), and such that the switchable flow connection is delivering output flow from the mixing chamber (2) to the alternate delivery duct (20') when the cylindrical flow diverter (60) is rotated to be, with its throughgoing transverse opening (62), aligned with the internal passageway (24') of the alternate delivery duct (20').

14. High pressure mixing head (1) according to claim 13, **characterized in that** the throughgoing transverse opening (62) of the flow diverter has an inner diameter equal and fitting to the inner diameter of the internal passageways (24, 24') the delivery duct (20) and the alternate delivery duct (20') such that, when the throughgoing transverse opening (62) is aligned with the internal passageway of the delivery duct (20) and the alternate delivery duct (20'), respectively, the rod of the delivery duct (20) and the alternate delivery duct (20'), respectively, can be advanced under the control of the control unit to move through the throughgoing transverse opening (62) and the remaining part of the internal passageway of the delivery duct (20) and of the alternate delivery duct (20'), respectively, to expel reactive polymeric mixture and residuals therefrom for cleaning purposes, before the control unit retracts the respective rod to allow rotation of the cylindrical flow diverter (60) to the next alignment position with the internal passageway of the delivery duct or the alternate delivery duct.

15. High pressure mixing head (1) according to claim 13 or 14, **characterized in that** the cylindrical cavity has a cross-sectional shape complementary to the cross-section of the cylindrical flow diverter (60).

16. Method for continuously producing polymeric foam using a high pressure mixing head according to any of the preceding claims, **characterized in that** during a first phase of a continuous production run the switchable flow connection of the high pressure mixing head is set to direct polymeric mixture expelled from the mixing chamber through the delivery duct (20) for dispensing the polymeric foam resulting from reactive polymeric mixture through the distributor (70) onto a moving substrate below the distributor (70), **in that** for terminating the first phase and for initiating a second alternate phase of the continuous production run the switchable flow connection and the positions of the rods (22, 22') in the delivery duct (20) and the alternate delivery duct (20') are switched over such that flow from the output opening (4) of the mixing chamber is directed to the alternate delivery duct (20') to thereby immediately switch over to the alternate delivery duct (20') as active output component for dispensing the polymeric foam through the distributor (70') of the alternate delivery duct (21') onto the moving substrate for continuing the continuous production run in its second phase, and **in that** during the second phase of the production run the delivery duct (20) is cleaned and its distributor (70) is cleaned or replaced.

17. Polymeric foam distribution system including a conveyor configured to transport a substrate in a transport direction and a multiple mixing head assembly comprising at least two high pressure mixing heads according to any of the preceding claims 1 - 15, the multiple mixing head assembly comprising a mounting frame including a longitudinal structure on which the mixing heads (1) are mounted spaced apart from each other in a linear arrangement extending transversely to the transport direction of the substrate, wherein each of the mixing heads is arranged on the longitudinal structure (60) to deliver a part of the polymeric foam that forms a foam layer on the advancing substrate, thereby distributing the foam in a direction transverse to the transport direction of the substrate, wherein the multiple mixing head assembly is further provided with a distributor replacement mechanism for detaching a set of distributors which are associated with one of the delivery ducts and the alternate delivery ducts of the mixing heads and for moving the detached set of distributors in a transverse direction to the transport direction of the substrate out of the zone above the substrate to allow replacement of the distributors while production continues utilizing the other one of the delivery ducts and the alternate delivery ducts for delivering polymeric foam.

18. Polymeric foam distribution system according to claim 17, wherein the distributor replacement mechanism comprises two subassemblies, one for the replacement of the set of distributors of the delivery ducts (20) of the mixing heads and one for the replacement of the set of distributors of the alternate delivery ducts (20'), wherein the two subassemblies comprise two longitudinal sides (60, 60') extending along the range which is covered by the spaced apart mixing heads (1) and along a lateral length section (61, 61') beyond the range covered by the mixing heads, wherein longitudinal guides (62, 62') are fixed to each of the longitudinal sides (60, 60'), wherein each of the longitudinal guides (62, 62') slidably guides one of the two holding slidable structures (63, 63') formed as bars for moving in transverse direction, each holding slidable structure (63, 63') holding the inlet ends of the set of distributors of one of the delivery ducts and the alternate delivery ducts in the appropriate spacing along the respective holding slidable structure (63, 63') so that the inlet ends of the set of distributors can be aligned with the output ends of the delivery ducts or alternate delivery ducts, wherein the distributor replacement mechanism comprises an axial actuator for sliding one of the holding slidable structures (63, 63') guided by the longitudinal guides (62, 62') from an operating position in which the inlet ends of the set of distributors is aligned with the output ends of one of the delivery ducts and alternate delivery ducts, respectively, to a transversely displaced service position outside of the area above the foam deposition on the substrate.

19. Polymeric foam distribution system according to claim 18, wherein the distributor replacement mechanism further comprises clamping or inserting devices (65, 65') by which the input ends (71, 71') of each of the two sets of distributors can be decoupled/coupled with the front end of the delivery ducts (20) and the alternate delivery ducts (20') of the mixing heads.

20. Polymeric foam distribution system according to any of the claims 17 to 19, wherein the distributor replacement mechanism is provided with a sliding connection between the output end (72, 72') of the delivery ducts (20) and of the alternate delivery ducts (20') and the inlet ends (73, 73') of the distributors (70, 70'), wherein the distributors (70, 70') are glued to a sealing sleeve (71, 71') provided with seals that seal the connection with the slidable holding bars (63, 63'), each holding one of the two sets of distributors and permitting to shift the set from the operation position to the transversely displaced service position and to shift them back to the operation position with the inlet ends of the distributors (70, 70') aligned with the output ends of the delivery ducts (20) and alternate delivery ducts (20'), respectively, wherein the distributor replacement mechanisms further comprises a sliding part (75, 75') encircling the sleeve at the output end of the delivery ducts and alternate delivery ducts by a circular drill fitting and with a circular seal (76) and a front seal (77).

## Patentansprüche

1. Hochdruckmischkopf (1) zur kontinuierlichen Herstellung von Polymerschaum mit:
einem Gehäusekörper (3), der eine Mischkammer (2) und Einspritzdüsen (6) zum Einspritzen von wenigstens zwei polymeren Flüssigkeiten umfasst, wobei ein Steuerkolben (8) in der Mischkammer in deren Längsrichtung zwischen einer zurückgezogenen Stellung, in der die Einspritzdüsen (6) in der Lage sind, Strahlen polymerer Flüssigkeiten in die Mischkammer (2) einzuspritzen, um sie unter turbulenten Bedingungen zu mischen, so dass ein reaktives polymeres Gemisch aus einer Ausgabeöffnung (4) der Mischkammer ausgestoßen wird, und einer vorgeschobenen Stellung beweglich ist, in der der Steuerkolben (8) in der Mischkammer (2) an den Einspritzdüsen (6) vorbei vorgeschoben ist und die polymeren Flüssigkeiten aus den Einspritzdüsen über Rücklaufkanäle zur Wiederverwendung zurückgeleitet werden, und
einer Ausgaberöhre (20), die quer zur Mischkammer (2) angeordnet ist, wobei eine Stange (22) gleitfähig in einem inneren Durchgangskanal (24) der Ausgaberöhre aufgenommen ist und mit einem Kolben (51) eines Aktuators verbunden ist, der dazu ausgestaltet ist, um die Stange entlang einer Längsachse der Ausgaberöhre zwischen einer zurückgezogenen Stellung, in der der innere Durchgangskanal (24) entlang der Ausgaberöhre in Fließverbindung mit der Mischkammer (2) steht, um das reaktive Polymergemisch, das aus der Ausgabeöffnung (4) ausgestoßen wird, aufzunehmen, um es entlang des inneren Durchgangskanals (24) und in einen Verteiler (70) zu leiten, der mit einem Ausgabeende der Ausgaberöhre (20) verbunden ist, um den aus dem reaktiven Polymergemisch hervorgegangenen Polymerschaum auszugeben, und einer vorgeschobenen Stellung zu bewegen, in der die Stange vollständig entlang des inneren Durchgangskanals (24) bewegt ist, um diesen zu reinigen, wobei die Stange (20) eine zum inneren Durchgangskanal (24) der Ausgaberöhre (20) komplementäre Querschnittsform hat, so dass sie den inneren Durchgangskanal (20) bis zu der Position, in die sie bewegt ist, verschließt,
**dadurch gekennzeichnet, dass** eine Wechselausgaberöhre (20') mit den gleichen Merkmalen und der gleichen Funktionalität wie die Ausgaberöhre (20) bereitgestellt ist, die quer zur Ausgaberöhre (20) und zur Mischkammer (4) verläuft, und dass die Ausgaberöhre (20) und die Wechselausgaberöhre (20') über einen umschaltbaren Durchflussanschluss in Fließverbindung mit der Mischkammer (4) stehen, und dass eine Steuereinheit dazu ausgestaltet ist, um den umschaltbaren Durchflussanschluss und die Positionen der Stangen (22, 22') in der Ausgaberöhre (20) und der Wechselausgaberöhre (20') zu steuern, so dass der Fluss aus der Ausgabeöffnung (4) der Mischkammer selektiv entweder in die Ausgaberöhre (20) oder die Wechselausgaberöhre (20') geleitet werden kann.

2. Hochdruckmischkopf (1) nach Anspruch 1, **dadurch gekennzeichnet, dass** der umschaltbare Durchflussanschluss gebildet ist durch einen Endbereich mit vergrößertem Durchmesser (26) des inneren Durchflusskanals (24) der Ausgaberöhre (20) und durch eine gleitfähig darin aufgenommene Hülse (30), wobei der Endbereich mit vergrößertem Durchmesser (26) von demjenigen Ende der Ausgaberöhre, das deren Ausgabeende gegenüberliegt, ausgeht und entlang des inneren Durchflusskanals (24) über die Ausgabeöffnung (4) der Mischkammer (2) hinaus ausgedehnt ist, so dass der Endbereich mit vergrößertem Durchmesser (26) in Fließverbindung mit der Ausgabeöffnung (4) der Mischkammer steht, wobei die im Endbereich mit vergrößertem Durchmesser (26) aufgenommene Hülse (30) einen Innendurchmesser hat, der gleich und passend zu dem Innendurchmesser des verbleibenden inneren Durchflusskanals (24) der Ausgaberöhre (20) ist und wobei die Hülse (30) innerhalb des Endbereichs mit vergrößertem Durchmesser (26) zwischen einer Schließposition, in der sie die Ausgabeöffnung (4) der Mischkammer abdeckt, und einer zurückgezogenen offenen Position beweglich ist, in der sie die Ausgabeöffnung (4) der Mischkammer wenigstens teilweise offen lässt, um Durchfluss aus der Mischkammer in den Endbereich mit vergrößertem Durchmesser (26) zu ermöglichen, und dass die Längsachsen der Ausgaberöhre (20) und der Wechselausgaberöhre (20') sich nicht in derselben Ebene erstrecken, sondern in einer Richtung senkrecht zu den Längsachsen von Ausgaberöhre und Wechselausgaberöhre gegeneinander in einem solchen Maße verschoben sind, dass der Endbereich mit vergrößertem Durchmesser (26) der Ausgaberöhre (20) und der innere Durchflusskanal (24') der Wechselausgaberöhre (20') einander schneiden, wodurch eine Ausgabenröhrenöffnung (29) zur Fließverbindung zwischen dem Endbereich mit vergrößertem Durchmesser (26) der Ausgaberöhre (20) und dem inneren Durchgangskanal (24') der Wechselausgaberöhre (20') gebildet ist, so dass, wenn die Steuereinheit die Position der Hülse (30) steuert, um in der offenen Position zu sein, Ausgabe aus der Mischkammer (2) in die Ausgaberöhre (20) geleitet wird, indem die Stange (22) der Ausgaberöhre positioniert ist, um den inneren Durchgangskanal (24) zu öffnen, und die Stange (22') der Wechselausgaberöhre (20') positioniert ist, um deren inneren Durchflusskanal (24') zu schließen, wohingegen Ausgabe aus der Mischkammer in die Wechselausgaberöhre (20') geleitet wird, indem die Stange (22') der Wechselausgaberöhre (20') positioniert ist, um deren inneren Durchflusskanal (24') zu öffnen, und die Stange (22) der Ausgaberöhre (20) positioniert ist, um deren inneren Durchflusskanal (24) zu schließen.

3. Hochdruckmischkopf (1) nach Anspruch 2, **dadurch gekennzeichnet, dass** die Ausgabenröhrenöffnung (29) sich in Fließrichtung durch die Ausgaberöhre (20) stromabwärts der Ausgabeöffnung (4) der Mischkammer (2) befindet.

4. Hochdruckmischkopf (1) nach Anspruch 3, **dadurch gekennzeichnet, dass** die Hülse (30) eine geneigte innere Endfläche (32) hat und dass eine in Längsrichtung innere Endregion des Endbereichs mit vergrößertem Durchmesser mit einer entgegengesetzt geneigten Endfläche (34) versehen ist, die der geneigten Endfläche (32) der Hülse (30) zugewandt ist, so dass, wenn die Hülse in die Schließposition bewegt ist, ihre geneigte Endfläche (32) in Anlage an der entgegengesetzt geneigten Endfläche (34) der inneren Endregion ist, und so dass, wenn die Hülse (30) in ihre zurückgezogene offene Position bewegt ist, eine geneigte Lücke (36) zwischen der geneigten inneren Endfläche (32) der Hülse und der entgegengesetzt geneigten Endfläche (34) der inneren Endregion gebildet ist, wobei die geneigte Lücke (36), wenn die Stange (32) der Ausgaberöhre deren inneren Durchflusskanal schließt, einen geneigten ringförmigen Fließweg aus der Ausgabeöffnung (4) der Mischkammer (2) um die Stange (22) der Ausgaberöhre zur Ausgabenröhrenöffnung (29) und in die Wechselausgaberöhre (20') bildet.

5. Hochdruckmischkopf (1) nach Anspruch 4, **dadurch gekennzeichnet, dass** die zurückgezogene Position der Stange (22) der Ausgaberöhre (20) in eine teilweise schließende Position einstellbar ist, in der ihre vordere Stirnfläche sich stromabwärts der Ausgabeöffnung der Mischkammer (4) und innerhalb der inneren Endregion des Endbereichs (26) mit vergrößertem Durchmesser befindet, so dass, wenn die Hülse (30) sich in der zurückgezogenen offenen Position befindet und wenn die Stange (22) der Ausgaberöhre (20) in der teilweise verschließenden Position ist und die Stange (22') der Wechselausgaberöhre (20') in ihrer vorgeschobenen, den inneren Durchflusskanal (24') verschließenden Position befindet, Fluidströmung aus der Ausgabeöffnung der Mischkammer (4) durch die geneigte Lücke (36) um die Stange (22) der Ausgaberöhre (20) und in die innere Endregion (27) des Endbereichs mit vergrößertem Durchmesser (26) und von dort weiter in den angrenzenden inneren Durchflusskanal (24) der Ausgaberöhre (20) fließt.

6. Hochdruckmischkopf (1) nach Anspruch 3, **dadurch gekennzeichnet, dass** die Hülse (30) eine kegelstumpfförmige Endfläche (38) hat, die entweder nach außen geneigt oder nach innen geneigt ist, so dass zwischen der kegelstumpfförmigen Endfläche und einer ringförmigen, komplementären kegelstumpfförmigen Schulter, die den Endbereich mit vergrößertem Durchmesser (26) des inneren Durchgangskanals (24) der Ausgaberöhre (20) abschließt, wenn die Hülse (30) in ihrer zurückgezogenen offenen Position ist, eine ringförmige Lücke gebildet ist, die, wenn die Stange (22) der Ausgaberöhre (20) ihren inneren Durchflusskanal (24) verschließt, ein ringförmiger Fließweg um die Stange (22) der Ausgaberöhre (20) von der Ausgabeöffnung (4) der Mischkammer zur Ausgaberöhrenöffnung (29) und in die Wechselausgaberöhre bildet, oder dass die Hülse (30) eine flache Endfläche hat, so dass zwischen der flachen Endfläche und einer komplementären flachen ringförmigen Schulter, die den Endbereich mit vergrößertem Durchmesser (26) des inneren Durchgangskanals (24) der Ausgaberöhre (20) abschließt, eine ringförmige Lücke gebildet ist, die, wenn die Stange (22) der Ausgaberöhre (20) ihren inneren Durchgangskanal (24) verschließt, einen ringförmigen Fließweg um die Stange (22) der Ausgaberöhre (20) von der Ausgabeöffnung (4) der Mischkammer zur Ausgaberöhrenöffnung (29) und in die Wechselausgaberöhre bildet.

7. Hochdruckmischkopf (1) nach einem der Ansprüche 2-6, **dadurch gekennzeichnet, dass** die innere Endfläche der Hülse (30) mit einer Aussparung (40) mit komplementärer Form zu einem Bereich der Oberfläche der Stange (22') der Wechselausgaberöhre (20') versehen ist, der durch die Ausgaberöhrenöffnung (29) in den Endbereich mit vergrößertem Durchmesser (26) des inneren Durchgangskanals (24) der Ausgaberöhre (20) vorsteht, wenn die Stange (22') die Wechselausgaberöhre (20') verschließt, so dass Bewegung der Hülse (30) in ihre Schließposition nicht behindert wird und so dass der vorstehende Bereich der Stange (22') der Wechselausgaberöhre (20') in der Aussparung (40) der inneren Endfläche der Hülse (30) aufgenommen ist, wenn diese ihre Schließposition erreicht.

8. Hochdruckmischkopf (1) nach einem der Ansprüche 2-7, **dadurch gekennzeichnet, dass** die Hülse (30) mit einem pneumatischen oder hydraulischen Antriebskolben (50) verbunden ist, um die Hülse (30) unter der Kontrolle der Steuereinheit selektiv zwischen der zurückgezogenen Position und der Schließposition zu bewegen, wobei die Hülse (30), wenn sie aus ihrer zurückgezogenen offene Position in die Schließposition bewegt wird, als ein Reinigungselement für den Endbereich mit vergrößertem Durchmesser (26) des inneren Durchgangskanals (24) agiert, um jegliche Harzreste in die Ausgaberöhre (20) oder der Wechselausgaberöhre (20') auszustoßen.

9. Hochdruckmischkopf (1) nach Anspruch 1, **dadurch gekennzeichnet, dass** die Ausgaberöhre (20) und die Wechselausgaberöhre (20') mit ihren Längsachsen in derselben Ebene verlaufen, so dass die inneren Durchgangskanäle (24, 24') der Ausgaberöhre und der Wechselausgaberöhre einander in einer Kreuzungszone kreuzen, und dass die Längsachse der Mischkammer (2) weniger als 20° in Bezug auf eine Normale auf der Ebene der Ausgaberöhre und der Wechselausgaberöhre geneigt ist, so dass die Ausgabeöffnung (4) der Mischkammer in die Kreuzungszone der inneren Durchgangskanäle (24, 24') der Ausgaberöhre (20) und der Wechselausgaberöhre (20') mündet, wobei die Ausgabeöffnung (4) der Mischkammer nicht zentriert ist in Bezug auf den Schnittpunkt der Längsachsen der Ausgaberöhre (20) und der Wechselausgaberöhre (20'), sondern entlang der Winkelhalbierenden des 90° Winkels zwischen der Ausgaberöhre (20) und der Wechselausgaberöhre (20') zu den Ausgabeenden der Ausgaberöhre und der Wechselausgaberöhre versetzt ist, um einen überlappenden Bereich der Ausgabeöffnung (4) der Mischkammer mit dem inneren Durchgangskanal von sowohl der Ausgaberöhre (20) als auch Wechselausgaberöhre (20') zu bilden, um den umschaltbaren Durchflussanschluss zu bilden, der Ausfluss aus der Ausgabeöffnung (4) der Mischkammer um die Stange (22') der Wechselausgaberöhre (20') in den inneren Durchgangskanal (24) der Ausgaberöhre jenseits der Kreuzungszone leitet, wenn die Stange (22') der Wechselausgaberöhre (20') positioniert ist, um durch die Kreuzungszone zu verlaufen und die Stange (22) der Ausgaberöhre (20) positioniert ist, um bis zur Stange (22') der Wechselausgaberöhre (20') zu reichen, und der Ausfluss aus der Mischkammer um die Stange (22) der Ausgaberöhre (20) in den inneren Durchgangskanal (24') der Wechselausgaberöhre (20') jenseits der Kreuzungszone leitet, wenn die Stange (22) der Ausgaberöhre (20) positioniert ist, um durch die Kreuzungszone zu verlaufen, und die Stange (22') der Wechselausgaberöhre (20') positioniert ist, um bis zur Stange (22) der Ausgaberöhre (20) zu reichen.

10. Hochdruckmischkopf (1) nach Anspruch 9, **dadurch gekennzeichnet, dass** die Längsachse der Mischkammer (2) in einer Ebene verläuft, die senkrecht zur Ebene der Ausgaberöhre und der Wechselausgaberöhre (20') steht und die die Winkelhalbierende zwischen der Ausgaberöhre (20) und der Wechselausgaberöhre (20') enthält.

11. Hochdruckmischkopf (1) nach einem der vorherhergehenden Ansprüche, **dadurch gekennzeichnet, dass** die Ausgaberöhre (20) und die Wechselausgaberöhre (20') mit ihren Längsachsen in derselben Ebene verlaufen, wobei ihre Längsachsen einen Winkel von 90° ± 20° zueinander bilden.

12. Hochdruckmischkopf (1) nach einem der Ansprüche 9-11, **dadurch gekennzeichnet dass** die Versetzung der Ausgabeöffnung (4) der Mischkammer in Bezug auf den Schnittpunkt der Längsachsen von Ausgaberöhre (20) und Wechselausgaberöhre (20') und die Durchmesser der Ausgabeöffnung (4) der Mischkammer und der inneren Durchgangskanäle (24, 24') der Ausgaberöhre (20) und der Wechselausgaberöhre (20') so sind, dass, wenn die Stange (22) in der Ausgaberöhre (20) durch die Kreuzungszone verläuft, ein Segment (44) des Zylinder-Zylinder-Schnittvolumens, das die Kreuzungszone der inneren Durchgangskanäle (24, 24') bildet, für die Ausgabeöffnung (4) der Mischkammer offen ist und mit dem Abschnitt des inneren Durchgangskanals der Wechselausgaberöhre (20') jenseits der Kreuzungszone kommuniziert, und dass, wenn die Stange (22') in der Wechselausgaberöhre (20') durch die Kreuzungszone verläuft, ein Segment (44) des Zylinder-Zylinder-Schnittvolumens für die Ausgabeöffnung (4) der Mischkammer offen ist und mit dem Abschnitt des inneren Durchgangskanals (24) der Ausgaberöhre (20) jenseits der Kreuzungszone kommuniziert.

13. Hochdruckmischkopf (1) nach Anspruch 1, **dadurch gekennzeichnet, dass** die Ausgaberöhre (20) und die Wechselausgaberöhre (20') mit ihren Längsachsen derselben Ebene verlaufen und dass ein zylindrischer Hohlraum mit seiner Zylinderachse senkrecht zur durch die Längsachsen der Ausgaberöhre und der Wechselausgaberöhre definierten Ebene verlaufend den Schnittpunkt der beiden Längsachsen schneidet, dass ein zylindrischer Flussumlenker (60) als Teil des Umschaltbaren Durchflussanschlusses in dem zylindrischen Hohlraum mit seiner Zylinderachse koaxial mit der Zylinderachse des zylindrischen Hohlraums angeordnet ist, wobei der zylindrische Flussumlenker (60) um seine Zylinderachse drehbar ist und mit seiner Zylinderachse mit der Längsachse der Mischkammer (2) ausgerichtet ist und wobei der zylindrische Flussumlenker (60) eine hindurchgehende Transversalöffnung (62) aufweist, die eine Fortsetzung des inneren Durchgangskanals der Ausgaberöhre (20) und der Wechselausgaberöhre (20') bildet, wobei der Flussumlenker (60) unter Steuerung der Steuereinheit so gedreht wird, dass seine hindurchgehende Transversalöffnung (62) mit dem inneren Durchgangskanal der Ausgaberöhre (20) bzw. der Wechselausgaberöhre (20') ausgerichtet ist, wobei der zylindrische Flussumlenker (60) weiterhin eine Eingangsöffnung aufweist, die in Verbindung mit der Ausgabeöffnung (4) der Mischkammer (2) steht und die mit der hindurchgehenden Transversalöffnung (62) kommuniziert, so dass, wenn die Stangen der Ausgaberöhre und der Wechselausgaberöhre zurückgezogen sind, um die hindurchgehende Transversalöffnung (62) für Fluidfluss aus der Eingabeöffnung zur hindurchgehenden Transversalöffnung (62) offenzuhalten, wobei der umschaltbare Durchflussanschluss Ausgabefluss von der Mischkammer (2) zur Ausgaberöhre (20) leitet, wenn der zylindrische Flussumlenker (60) so gedreht ist, um mit seiner hindurchgehenden Transversalöffnung (62) mit dem inneren Durchgangskanal (24) der Ausgaberöhre (20) ausgerichtet zu sein, und so dass der umschaltbare Durchflussanschluss Ausgabefluss aus der Mischkammer (2) in die Wechselausgaberöhre (20') leitet, wenn der zylindrische Flussumlenker (60) so gedreht ist, um mit seiner hindurchgehenden Transversalöffnung (62) mit dem inneren Durchgangskanal (24') der Wechselausgaberöhre (20') ausgerichtet zu sein.

14. Hochdruckmischkopf (1) nach Anspruch 13, **dadurch gekennzeichnet, dass** die hindurchgehende Transversalöffnung (62) des Flussumlenkers einen Innendurchmesser hat, der gleich ist mit und passend ist zum Innendurchmesser der inneren Durchgangskanäle (24, 24') der Ausgaberöhre (20) und der Wechselausgaberöhre (20'), so dass, wenn die hindurchgehende Transversalöffnung (62) mit dem inneren Durchgangskanal der Ausgaberöhre (20) bzw. der Wechselausgaberöhre (20') ausgerichtet ist, die Stange der Ausgaberöhre (20) bzw. der Wechselausgaberöhre (20') unter Steuerung der Steuereinheit vorgeschoben werden kann, um sich durch die hindurchgehende Transversalöffnung (62) und den verbleibenden Teil des inneren Durchgangskanals der Ausgaberöhre (20) bzw. der Wechselausgaberöhre (20') zu bewegen, um reaktives Polymergemisch und Reste davon zu Reinigungszwecken auszustoßen, bevor die Steuereinheit die jeweilige Stange zurückzieht, um die Drehung des zylindrischen Flussumlenkers (60) in die nächste Ausrichtungsposition mit dem inneren Durchgangskanal der Ausgaberöhre oder der Wechselausgaberöhre (20') zu erlauben.

15. Hochdruckmischkopf (1) nach Anspruch 13 oder 14, **dadurch gekennzeichnet, dass** der zylindrische Hohlraum eine Querschnittsform hat, die komplementär zum Querschnitt des zylindrischen Flussumlenkers (60) ist.

16. Verfahren zum kontinuierlichen Herstellen von Polymerschaum unter Verwendung eines Hochdruckmischkopfes nach einem der vorhergehenden Ansprüche, **dadurch gekennzeichnet, dass** in einer ersten Phase eines kontinuierlichen Herstellungslaufs der umschaltbare Durchflussanschluss des Hochdruckmischkopfes eingestellt ist, um aus der Mischkammer ausgestoßenes Polymergemisch durch die Ausgaberöhre (20) zu leiten, um den aus dem reaktiven Polymergemisch entstandenen Polymerschaum durch den Verteiler (70) auf ein sich bewegendes Substrat unterhalb des Verteilers (70) auszugeben, dass zum Abschließen der ersten Phase und zum Einleiten einer zweiten Wechselphase des kontinuierlichen Herstellungslaufs der umschaltbare Durchflussanschluss und die Positionen der Stangen (22, 22') in der Ausgaberöhre (20) und der Wechselausgaberöhre (20') umgeschaltet werden, so dass der Fluss aus der Ausgabeöffnung (4) der Mischkammer in die Wechselausgaberöhre (20') umgelenkt wird, um dadurch augenblicklich auf die Wechselausgaberöhre (20') als aktive Ausgabekomponente zum Ausgeben des Polymerschaums durch den Verteiler (70') der Wechselausgaberöhre (21') auf das sich bewegende Substrat umzuschalten, um den kontinuierlichen Herstellungslauf in seiner zweiten Phase fortzusetzen, und dass während der zweiten Phase des Herstellungslaufs die Ausgaberöhre (20) gereinigt wird und ihr Verteiler (70) gereinigt oder ersetzt wird.

17. Polymerschaum-Verteilungssystem mit einer Fördereinrichtung, die zum Transportieren eines Substrats in einer Transportrichtung eigerichtet ist, und mit einem Mehrfachmischkopfaufbau mit wenigstens zwei Hochdruckmischköpfen gemäß einem der vorhergehenden Ansprüche 1-15, wobei der Mehrfachmischkopfaufbau einen Montagerahmen einschließlich einer Längsstruktur aufweist, an der Mischköpfe (1) auf Abstand zueinander in einer linearen Anordnung, die quer zur Transportrichtung des Substrats verläuft, montiert sind, wobei jeder der Mischköpfe an der Längsstruktur (60) angeordnet ist, um einen Teil des Polymerschaums zu liefern, der eine Schaumschicht auf dem sich vorwärtsbewegenden Substrat bildet, wodurch der Schaum in einer Richtung quer zur Transportrichtung des Substrats verteilt wird, wobei der Mehrfachmischkopfaufbau ferner mit einem Verteilerersetzungsmechanismus ausgerüstet ist, um einen Satz von Verteilern, der einen von den Ausgaberöhren und den Wechselausgaberöhren der Mischköpfe zugeordnet ist, zu demontieren und um den demontierten Satz von Verteilern in Querrichtung zur Transportrichtung des Substrats aus der Zone oberhalb des Substrats heraus zu bewegen, um die Ersetzung der Verteiler zu ermöglichen, während die Produktion unter Verwendung der anderen von den Ausgaberöhren und den Wechselausgaberöhren zum Liefern von Polymerschaum fortgesetzt wird.

18. Polymerschaum-Verteilungssystem nach Anspruch 17, wobei der Verteilerersetzungsmechanismus zwei Unteraufbauten aufweist, einen zur Ersetzung des Satzes von Verteilern der Ausgaberöhren (20) der Mischköpfe und einen zur Ersetzung des Satzes von Verteilern der Wechselausgaberöhren (20'), wobei die zwei Unteraufbauten zwei Längsseiten (60, 60') aufweisen, die entlang des Bereichs, der durch die voneinander beabstandeten Mischköpfe (1) abgedeckt ist, und entlang eines seitlichen Längsabschnitts (61, 61') über den durch die Mischköpfe abgedeckten Bereich hinaus ausgedehnt sind, wobei Längsführungen (62, 62') an jeder der Längsseiten (60, 60') fixiert sind, wobei jede der Längsführungen (62, 62') eine von zwei gleitfähigen Haltestrukturen (63, 63') gleitend führt, die als Stangen zur Bewegung in Querrichtung ausgebildet sind, wobei jede gleitfähige Haltestruktur (63, 63') die Einlassenden des Satzes von Verteilern von einer von den Ausgaberöhren und den Wechselausgaberöhren in richtigen Abständen entlang der jeweiligen gleitfähigen Haltestrukturen (63, 63') hält, so dass die Einlassenden des Satzes von Verteilern mit den Ausgabeenden der Ausgaberöhren oder der Wechselausgaberöhren ausgerichtet werden können, wobei der Verteilerersetzungsmechanismus einen axialen Aktuator aufweist, um eine der gleitfähigen Haltestrukturen (63, 63') geführt durch die Längsführungen (62, 62') aus einer Betriebsposition, in der die Einlassenden des Satzes von Verteilern mit den Ausgabeenden von einer der Ausgaberöhren bzw. der Wechselausgaberöhren ausgerichtet sind, in eine in Querrichtung versetzte Serviceposition außerhalb des Gebiets oberhalb der Schaumaufbringung auf das Substrat zu bewegen.

19. Polymerschaum-Verteilungssystem nach Anspruch 18, wobei der Verteilerersetzungsmechanismus weiterhin Klemm- oder Einsetzvorrichtungen (65, 65') aufweist, von denen die Eingangsenden (71, 71') von jedem der beiden Sätze von Verteilern mit den Vorderenden der Ausgaberöhren (20) und der Wechselausgaberöhren (20') der Mischköpfe gekoppelt oder davon entkoppelt werden können.

20. Polymerschaum-Verteilungssystem nach einem der Ansprüche 17 bis 19, wobei der Verteilerersetzungsmechanismus mit einer Schiebeverbindung zwischen den Ausgabeenden (72, 72') der Ausgaberöhren (20) und der Wechselausgaberöhren (20') und den Einlassenden (73, 73') der Verteiler (70, 70') versehen ist, wobei die Verteiler (70, 70') an eine Dichtungshülse (71, 71') geklebt sind, die mit Dichtungen versehen ist, die die Verbindung mit den gleitfähigen Haltestäben (63, 63') abdichten, von denen jeder einen von zwei Sätzen von Verteilern hält und es ermöglicht, den Satz aus der Betriebsposition in die in Querrichtung versetzte Serviceposition zu verschieben und sie zurück in die Arbeitsposition mit den Einlassenden der Verteiler (70, 70') ausgerichtet mit den Ausgabeenden der Ausgaberöhren (20) und Wechselausgaberöhren (20') zu verschieben, wobei der Verteilerersetzungsmechanismus weiter ein gleitendes Teil (75, 75') aufweist, das die Hülse am Ausgabeende der Ausgaberöhren und der Wechselausgaberöhren durch eine kreisförmige Bohrarmatur mit einer kreisförmigen Umfangsdichtung (76) und einer Stirnflächendichtung (67) kreisförmig umgibt.

## Revendications

1. Tête de mélange à haute pression (1) pour la production en continu de mousse polymère, comprenant
un corps (3) comprenant une chambre de mélange (2) et des injecteurs (6) pour injecter au moins deux liquides polymères, dans laquelle une bobine (8) est mobile dans la chambre de mélange dans une direction longitudinale de celle-ci entre une position rétractée dans laquelle les injecteurs (6) sont capables d'injecter des jets de liquides polymères dans la chambre de mélange (2) pour qu'ils soient mélangés dans des conditions turbulentes de telle sorte qu'un mélange polymère réactif soit expulsé d'une ouverture de sortie (4) de la chambre de mélange, et une position avancée dans laquelle la bobine (8) est avancée dans la chambre de mélange (2) au-delà des injecteurs (6) et les liquides polymères provenant des injecteurs sont renvoyés pour être recyclés via des canaux de recyclage, et
un conduit de distribution (20) qui est disposé transversalement par rapport à la chambre de mélange (2), dans laquelle une tige (22) est reçue de manière coulissante dans un passage interne (24) du conduit de distribution et est reliée à un piston (51) d'un actionneur configuré pour déplacer la tige le long d'un axe longitudinal du conduit de distribution entre une position rétractée dans laquelle le passage interne (24) le long du conduit de distribution est en communication fluidique avec la chambre de mélange (2) pour recevoir le mélange polymère réactif expulsé de l'ouverture de sortie (4) pour l'acheminer le long du passage interne (24) et jusque dans un distributeur (70) relié à une extrémité de sortie du conduit de distribution (20) pour distribuer la mousse polymère résultant du mélange polymère réactif, et une position avancée dans laquelle elle est déplacée tout le long du passage interne (24) pour son nettoyage, dans laquelle la tige (20) est de forme transversale complémentaire par rapport au passage interne (24) du conduit de distribution (20) de telle sorte qu'elle ferme le passage interne (24) jusqu'à la position vers laquelle elle est déplacée,
**caractérisé en ce qu'**un conduit de distribution alternatif (20') présentant les mêmes caractéristiques et fonctionnalités que le conduit de distribution (20) est prévu, qui s'étend transversalement par rapport au conduit de distribution (20) et à la chambre de mélange (2), et **en ce que** le conduit de distribution (20) et le conduit de distribution alternatif (20') sont en communication d'écoulement avec la chambre de mélange (2) via une connexion d'écoulement commutable, et une unité de commande est configurée pour commander la connexion d'écoulement commutable et les positions des tiges (22, 22') dans le conduit de distribution (20) et le conduit de distribution alternatif (20') de telle sorte que l'écoulement provenant de l'ouverture de sortie (4) de la chambre de mélange puisse être dirigé sélectivement soit vers le conduit de distribution (20) soit vers le conduit de distribution alternatif (20').

2. Tête de mélange à haute pression (1) selon la revendication 1, **caractérisée en ce que** la connexion d'écoulement commutable est formée par une partie d'extrémité de diamètre élargi (26) du passage interne (24) du conduit de distribution (20) et par un manchon (30) reçu de manière coulissante en son sein, dans laquelle la partie d'extrémité de diamètre élargi (26) s'étend à partir de l'extrémité du conduit de distribution opposée à son extrémité de sortie et s'étend le long du passage interne (24) au-delà de l'ouverture de sortie (4) de la chambre de mélange (2) de telle sorte que la partie d'extrémité de diamètre élargi (26) soit en communication fluidique avec l'ouverture de sortie (4) de la chambre de mélange, dans laquelle le manchon (30) reçu dans la partie d'extrémité de diamètre élargi (26) présente un diamètre interne égal et ajusté au diamètre interne du passage interne restant (24) du conduit de distribution (20) et dans laquelle le manchon (30) est mobile à l'intérieur de la partie d'extrémité de diamètre élargi (26) entre une position de fermeture dans laquelle il recouvre l'ouverture de sortie (4) de la chambre de mélange et une position ouverte rétractée dans laquelle il laisse ouverte au moins une partie de l'ouverture de sortie (4) de la chambre de mélange pour permettre un écoulement depuis la chambre de mélange jusque dans la partie d'extrémité de diamètre élargi (26), et **en ce que** les axes longitudinaux du conduit de distribution (20) et du conduit de distribution alternatif (20') ne s'étendent pas dans un plan commun, mais sont décalés, dans une direction perpendiculaire aux axes longitudinaux du conduit de distribution et du conduit de distribution alternatif, l'un par rapport à l'autre dans une mesure telle que la partie d'extrémité de diamètre élargi (26) du conduit de distribution (20) et le passage interne (24') du conduit de distribution alternatif (20') se recoupent, en formant ainsi une ouverture de conduit de distribution (29) pour une communication d'écoulement entre la partie d'extrémité de diamètre élargi (26) du conduit de distribution (20) et le passage interne (24') du conduit de distribution alternatif (20'), de telle sorte que lorsque l'unité de commande commande le positionnement du manchon (30) pour être dans la position ouverte, la sortie depuis la chambre de mélange (2) soit dirigée vers le conduit de distribution (20) en positionnant la tige (22) du conduit de distribution pour ouvrir son passage interne (24) et en positionnant la tige (22') du conduit de distribution alternatif (20') pour fermer son passage interne (24'), tandis que la sortie depuis la chambre de mélange est dirigée vers le conduit de distribution alternatif (20') en positionnant la tige (22') du conduit de distribution alternatif (20') pour ouvrir son passage interne (24') et en positionnant la tige (22) du conduit de distribution (20) pour fermer son passage interne (24).

3. Tête de mélange à haute pression (1) selon la revendication 2, **caractérisée en ce que** l'ouverture du conduit de distribution (29) est située, dans la direction d'écoulement à travers le conduit de distribution (20), en aval de l'ouverture de sortie (4) de la chambre de mélange (2).

4. Tête de mélange à haute pression (1) selon la revendication 3, **caractérisée en ce que** le manchon (30) présente une face d'extrémité intérieure inclinée (32) et **en ce qu'**une région d'extrémité intérieure longitudinale de la partie d'extrémité de diamètre élargi est pourvue d'une face d'extrémité inclinée de manière opposée (34) faisant face à la face d'extrémité inclinée (32) du manchon (30) de telle sorte que lorsque le manchon (30) est déplacé vers la position de fermeture, sa face d'extrémité inclinée (32) soit en butée sur la face d'extrémité inclinée de manière opposée (34) de la région d'extrémité intérieure et de telle sorte que lorsque le manchon (30) est déplacé vers sa position ouverte rétractée, un espace incliné (36) soit formé entre la face d'extrémité intérieure inclinée (32) du manchon et la face d'extrémité inclinée de manière opposée (34) de la région d'extrémité interne, lequel espace incliné (36) forme, lorsque la tige (22) du conduit de distribution ferme son passage interne, un trajet d'écoulement annulaire incliné depuis l'ouverture de sortie (4) de la chambre de mélange (2), autour de la tige (22) du conduit de distribution jusqu'à l'ouverture de conduit de distribution (29) et jusque dans le conduit de distribution alternatif (20').

5. Tête de mélange à haute pression (1) selon la revendication 4, **caractérisée en ce que** la position rétractée de la tige (22) du conduit de distribution (20) est ajustable à une position de fermeture partielle dans laquelle sa face d'extrémité avant est située en aval de l'ouverture de sortie de chambre de mélange (4) et à l'intérieur de la région d'extrémité intérieure de la partie d'extrémité de diamètre élargi (26), de telle sorte que lorsque le manchon (30) est dans la position ouverte rétractée, et lorsque la tige (22) du conduit de distribution (20) est dans la position de fermeture partielle et la tige (22') du conduit de distribution alternatif (20') est dans sa position avancée fermant son passage interne (24'), un écoulement de fluide à partir de l'ouverture de sortie (4) de la chambre de mélange s'écoule à travers l'espace incliné (36) autour de la tige (22) du conduit de distribution (20) et jusque dans la région d'extrémité intérieure (27) de la partie d'extrémité de diamètre élargi (26) et de là se poursuit jusque dans le passage interne adjacent (24) du conduit de distribution (20).

6. Tête de mélange à haute pression selon la revendication 3, **caractérisée en ce que** le manchon (30) présente une face d'extrémité tronconique (38) qui peut être inclinée vers l'extérieur ou vers l'intérieur, de telle sorte qu'entre la face d'extrémité tronconique et un épaulement tronconique complémentaire annulaire terminant la partie d'extrémité de diamètre élargi (26) du passage interne (24) du conduit de distribution (20), lorsque le manchon (30) est dans sa position ouverte rétractée, un espace annulaire soit formé, lequel espace annulaire forme, lorsque la tige (22) du conduit de distribution (20) ferme son passage interne (24), un trajet d'écoulement annulaire autour de la tige (22) du conduit de distribution (20) depuis l'ouverture de sortie (4) de la chambre de mélange jusqu'à l'ouverture de conduit de distribution (29) et jusque dans le conduit de distribution alternatif, ou **en ce que** le manchon (30) présente une face d'extrémité plate de telle sorte qu'entre la face d'extrémité plate et un épaulement annulaire plat complémentaire terminant la partie d'extrémité de diamètre élargi (26) du passage interne (24) du conduit de distribution (20), un espace annulaire soit formé, lequel espace annulaire forme, lorsque la tige (22) du conduit de distribution (20) ferme son passage interne (24), un trajet d'écoulement annulaire autour de la tige (22) du conduit de distribution (20) depuis l'ouverture de sortie (4) de la chambre de mélange jusqu'à l'ouverture du conduit de distribution (29) et jusque dans le conduit de distribution alternatif.

7. Tête de mélange à haute pression (1) selon l'une quelconque des revendications 2 à 6, **caractérisée en ce que** la face d'extrémité intérieure du manchon (30) est pourvue d'un évidement (40) de forme complémentaire à une partie de la surface de la tige (22') du conduit de distribution alternatif (20') faisant saillie à travers l'ouverture de conduit de distribution (29) jusque dans la partie d'extrémité de diamètre élargi (26) du passage interne (24) du conduit de distribution (20) lorsque la tige (22') ferme le conduit de distribution alternatif (20') de telle sorte que le mouvement du manchon (30) vers sa position de fermeture ne soit pas obstrué et de telle sorte que la partie en saillie de la tige (22) du conduit de distribution alternatif (20') soit reçue dans l'évidement (40) de la face d'extrémité intérieure du manchon (30) lorsqu'elle a atteint sa position de fermeture.

8. Tête de mélange à haute pression (1) selon l'une quelconque des revendications 2 à 7, **caractérisée en ce que** le manchon (30) est relié à un piston d'actionnement pneumatique ou hydraulique (50) pour déplacer sélectivement le manchon (30) entre la position rétractée et la position de fermeture sous la commande de l'unité de commande, dans laquelle le manchon (30), lorsqu'il est déplacé de la position ouverte rétractée vers la position de fermeture, agit comme un élément de nettoyage pour la partie d'extrémité de diamètre élargi (26) du passage interne (24) pour expulser tout résidu de résine vers le conduit de distribution (20) ou le conduit de distribution alternatif (20').

9. Tête de mélange à haute pression (1) selon la revendication 1, **caractérisée en ce que** le conduit de distribution (20) et le conduit de distribution alternatif (20') s'étendent avec leurs axes longitudinaux dans un même plan de telle sorte que les passages internes (24, 24') du conduit de distribution et du conduit de distribution alternatif se croisent dans une zone de croisement, et **en ce que** l'axe longitudinal de la chambre de mélange (2) est incliné de moins de 20° par rapport à une normale du plan du conduit de distribution et du conduit de distribution alternatif, de telle sorte que l'ouverture de sortie (4) de la chambre de mélange se confonde dans la zone de croisement des passages internes (24, 24') du conduit de distribution (20) et du conduit de distribution alternatif (20'), dans laquelle l'ouverture de sortie (4) de la chambre de mélange n'est pas centrée par rapport au point d'intersection des axes longitudinaux du conduit de distribution (20) et du conduit de distribution alternatif (20'), mais elle est déplacée le long de la ligne de bissection de l'angle de 90° entre le conduit de distribution (20) et le conduit de distribution alternatif (20') vers les extrémités de sortie du conduit de distribution et du conduit de distribution alternatif pour former une partie de chevauchement de l'ouverture de sortie (4) de la chambre de mélange avec le passage interne de chacun du conduit de distribution (20) et du conduit de distribution alternatif (20') afin de former la connexion d'écoulement commutable qui dirige un écoulement depuis l'ouverture de sortie (4) de la chambre de mélange autour de la tige (22') du conduit de distribution alternatif (20') dans le passage interne (24) du conduit de distribution au-delà de la zone de croisement lorsque la tige (22') du conduit de distribution alternatif (20') est positionnée pour s'étendre à travers la zone de croisement et la tige (22) du conduit de distribution (20) est positionnée pour s'étendre jusqu'à la tige (22') du conduit de distribution alternatif (20'), et qui dirige un écoulement de sortie depuis la chambre de mélange (2) autour de la tige (22) du conduit de distribution (20) jusque dans le passage interne (24') du conduit de distribution alternatif (20') au-delà de la zone de croisement, lorsque la tige (22) du conduit de distribution (20) est positionnée pour s'étendre à travers la zone de croisement et la tige (22') du conduit de distribution alternatif (20') est positionnée pour s'étendre jusqu'à la tige (22) du conduit de distribution (20).

10. Tête de mélange à haute pression (1) selon la revendication 9, **caractérisée en ce que** l'axe longitudinal de la chambre de mélange (2) s'étend dans un plan qui est perpendiculaire au plan du conduit de distribution et du conduit de distribution alternatif et qui comprend la ligne de bissection entre le conduit de distribution (20) et le conduit de distribution alternatif (20').

11. Tête de mélange à haute pression (1) selon l'une quelconque des revendications précédentes, **caractérisée en ce que** le conduit de distribution (20) et le conduit de distribution alternatif (20') s'étendent avec leurs axes longitudinaux dans le même plan, avec leurs axes longitudinaux formant un angle de 90°±20° l'un avec l'autre.

12. Tête de mélange haute pression (1) selon l'une quelconque des revendications 9 à 11, **caractérisée en ce que** le déplacement de l'ouverture de sortie (4) de la chambre de mélange par rapport au point d'intersection des axes longitudinaux du conduit de distribution (20) et du conduit de distribution alternatif (20') et les diamètres de l'ouverture de sortie (4) de la chambre de mélange et des passages internes (24, 24') du conduit de distribution (20) et du conduit de distribution alternatif (20') sont tels que lorsque la tige (22) dans le conduit de distribution (20) s'étend à travers la zone de croisement, un segment (44) de l'intersection cylindre-cylindre formant la zone de croisement des passages internes (24, 24') est ouvert pour l'ouverture de sortie (4) de la chambre de mélange et communique avec la section de passage interne du conduit de distribution alternatif (20') au-delà de la zone de croisement, et de telle sorte que lorsque la tige (22') dans le conduit de distribution alternatif (20') s'étend à travers la zone de croisement, un segment (44) de l'intersection cylindre-cylindre est ouvert pour l'ouverture de sortie (4) de la chambre de mélange et communiquant avec la section de passage interne (24) du conduit de distribution (20) au-delà de la zone de croisement.

13. Tête de mélange à haute pression (1) selon la revendication 1, **caractérisée en ce que** le conduit de distribution (20) et le conduit de distribution alternatif (20') s'étendent avec leurs axes longitudinaux dans le même plan, et **en ce qu'**une cavité cylindrique recoupe, avec son axe de cylindre s'étendant perpendiculairement au plan défini par les axes longitudinaux du conduit de distribution et du conduit de distribution alternatif, le point d'intersection des deux axes longitudinaux, **en ce qu'**un déviateur de flux cylindrique (60), dans le cadre de la connexion d'écoulement commutable, est situé dans la cavité cylindrique avec son axe de cylindre coaxial à l'axe de cylindre de la cavité cylindrique, dans laquelle le déviateur de flux cylindrique (60) est rotatif autour de son axe de cylindre et est avec son axe de cylindre aligné avec l'axe longitudinal de la chambre de mélange (2) et dans laquelle le déviateur de flux cylindrique (60) comprend une ouverture transversale traversante (62) formant un prolongement du passage interne du conduit de distribution (20) et du conduit de distribution alternatif (20'), respectivement, le déviateur de flux (60) est, sous la commande de l'unité de commande, tourné de telle sorte que son ouverture transversale traversante (62) soit alignée avec le passage interne du conduit de distribution (20) et du conduit de distribution alternatif (20'), respectivement, le déviateur de flux cylindrique (60) comprenant en outre une ouverture d'entrée qui est en communication avec l'ouverture de sortie (4) de la chambre de mélange (2) et qui communique avec l'ouverture transversale traversante (62), de telle sorte que, lorsque les tiges du conduit de distribution et du conduit de distribution alternatif sont rétractées pour maintenir l'ouverture transversale traversante (62) ouverte pour un écoulement de fluide depuis l'ouverture d'entrée vers l'ouverture transversale traversante (62), la connexion d'écoulement commutable distribue un écoulement de sortie depuis la chambre de mélange (2) vers le conduit de distribution (20) lorsque le déviateur d'écoulement cylindrique (60) est tourné pour être, avec son ouverture transversale traversante (62), aligné avec le passage interne (24) du conduit de distribution (20), et de telle sorte que la connexion d'écoulement commutable distribue un écoulement de sortie depuis la chambre de mélange (2) vers le conduit de distribution alternatif (20') lorsque le déviateur d'écoulement cylindrique (60) est tourné pour être, avec son ouverture transversale traversante (62), aligné avec le passage interne (24') du conduit de distribution alternatif (20').

14. Tête de mélange à haute pression (1) selon la revendication 13, **caractérisée en ce que** l'ouverture transversale traversante (62) du déviateur de flux présente un diamètre interne égal et adapté au diamètre interne des passages internes (24, 24') du conduit de distribution (20) et du conduit de distribution alternatif (20') de telle sorte que lorsque l'ouverture transversale traversante (62) est alignée avec le passage interne du conduit de distribution (20) et du conduit de distribution alternatif (20'), respectivement, la tige du conduit de distribution (20) et du conduit de distribution alternatif (20'), respectivement, peut être avancée sous la commande de l'unité de commande pour se déplacer à travers l'ouverture transversale traversante (62) et la partie restante du passage interne du conduit de distribution (20) et du conduit de distribution alternatif (20'), respectivement, afin d'expulser le mélange polymère réactif et les résidus de celui-ci à des fins de nettoyage, avant que l'unité de commande ne rétracte la tige respective pour permettre une rotation du déviateur de flux cylindrique (60) vers la position d'alignement suivante avec le passage interne du conduit de distribution ou du conduit de distribution alternatif.

15. Tête de mélange à haute pression (1) selon la revendication 13 ou 14, **caractérisée en ce que** la cavité cylindrique a une forme de section transversale complémentaire à la section transversale du déviateur d'écoulement cylindrique (60).

16. Procédé de production en continu de mousse polymère à l'aide d'une tête de mélange à haute pression selon l'une quelconque des revendications précédentes, **caractérisé en ce que** pendant une première phase d'un cycle de production en continu, la connexion d'écoulement commutable de la tête de mélange à haute pression est réglée pour diriger le mélange polymère expulsé de la chambre de mélange à travers le conduit de distribution (20) pour distribuer la mousse polymère résultant du mélange polymère réactif à travers le distributeur (70) jusque sur un substrat en mouvement sous le distributeur (70), **en ce que** pour mettre fin à la première phase et pour lancer une deuxième phase alternative du cycle de production en continu, la connexion d'écoulement commutable et les positions des tiges (22, 22') dans le conduit de distribution (20) et le conduit de distribution alternatif (20') sont commutées de telle sorte que l'écoulement provenant de l'ouverture de sortie (4) de la chambre de mélange soit dirigé vers le conduit de distribution alternatif (20') pour ainsi commuter immédiatement vers le conduit de distribution alternatif (20') en tant que composant de sortie actif pour distribuer la mousse polymère à travers le distributeur (70') du conduit de distribution alternatif (21') jusque sur le substrat en mouvement afin de poursuivre le cycle de production en continu dans sa deuxième phase, et **en ce que** pendant la deuxième phase du cycle de production, le conduit de distribution (20) est nettoyé et son distributeur (70) est nettoyé ou remplacé.

17. Système de distribution de mousse polymère comprenant un convoyeur configuré pour transporter un substrat dans une direction de transport et un ensemble de têtes de mélange multiples comprenant au moins deux têtes de mélange à haute pression selon l'une quelconque des revendications précédentes 1 à 15, l'ensemble de têtes de mélange multiples comprenant un cadre de montage comprenant une structure longitudinale sur laquelle les têtes de mélange (1) sont montées espacées les unes des autres dans un agencement linéaire s'étendant transversalement à la direction de transport du substrat, dans lequel chacun des têtes de mélange est agencée sur la structure longitudinale (60) pour distribuer une partie de la mousse polymère qui forme une couche de mousse sur le substrat en progression, en distribuant ainsi la mousse dans une direction transversale à la direction de transport du substrat, dans lequel l'ensemble de têtes de mélange multiples est en outre pourvu d'un mécanisme de remplacement de distributeur pour détacher un ensemble de distributeurs qui sont associés à un certain des conduits de distribution et des conduits de distribution alternés des têtes de mélange et pour déplacer l'ensemble de distributeurs détaché dans un direction transversale à la direction de transport du substrat hors de la zone au-dessus du substrat pour permettre le remplacement des distributeurs pendant que la production continue en utilisant l'autre des conduits de distribution et les conduits de distribution alternatifs pour distribuer la mousse polymère.

18. Système de distribution de mousse polymère selon la revendication 17, dans lequel le mécanisme de remplacement de distributeur comprend deux sous-ensembles, un certain pour le remplacement de l'ensemble de distributeurs des conduits de distribution (20) des têtes de mélange et l'autre pour le remplacement de l'ensemble de distributeurs des conduits de distribution alternatifs (20'), dans lequel les deux sous-ensembles comprennent deux côtés longitudinaux (60, 60') s'étendant le long de la plage qui est couverte par les têtes de mélange espacées (1) et le long d'une section de longueur latérale (61, 61') au-delà de la plage couverte par les têtes de mélange, dans lequel des guides longitudinaux (62, 62') sont fixés à chacun des côtés longitudinaux (60, 60'), dans lequel chacun des guides longitudinaux (62, 62') guide de manière coulissante une certaine des deux structures coulissantes de maintien (63, 63') formées sous la forme de barres pour se déplacer dans la direction transversale, chaque structure coulissante de maintien (63, 63') maintenant les extrémités d'entrée de l'ensemble de distributeurs d'un certain des conduits de distribution et des conduits de distribution alternatifs dans l'espacement approprié le long de la structure coulissante de maintien respective (63, 63') de telle sorte que les extrémités d'entrée de l'ensemble de distributeurs puissent être alignées avec les extrémités de sortie des conduits de distribution ou des conduits de distribution alternatifs, dans lequel le mécanisme de remplacement de distributeur comprend un actionneur axial pour faire coulisser une certaine des structures coulissantes de maintien (63, 63') guidées par les guides longitudinaux (62, 62') à partir d'une position de fonctionnement dans laquelle les extrémités d'entrée de l'ensemble de distributeurs sont alignées avec les extrémités de sortie d'un certain des conduits de distribution et des conduits de distribution alternatifs, respectivement, vers une position de service déplacée transversalement à l'extérieur de la zone au-dessus du dépôt de mousse sur le substrat.

19. Système de distribution de mousse polymère selon la revendication 18, dans lequel le mécanisme de remplacement de distributeur comprend en outre des dispositifs de serrage ou d'insertion (65, 65') par l'intermédiaire desquels les extrémités d'entrée (71, 71') de chacun des deux ensembles de distributeurs peuvent être découplées de/couplées à l'extrémité avant des conduits de distribution (20) et des conduits de distribution alternatifs (20') des têtes de mélange.

20. Système de distribution de mousse polymère selon l'une quelconque des revendications 17 à 19, dans lequel le mécanisme de remplacement de distributeur est pourvu d'une connexion coulissante entre l'extrémité de sortie (72, 72') des conduits de distribution (20) et des conduits de distribution alternatifs (20') et les extrémités d'entrée (73, 73') des distributeurs (70, 70'), dans lequel les distributeurs (70, 70') sont collés à un manchon d'étanchéité (71, 71') pourvu de joints qui assurent l'étanchéité de la connexion avec les barres de maintien coulissantes (63, 63'), chacun tenant l'un des deux ensembles de distributeurs et permettant de déplacer l'ensemble de la position de fonctionnement à la position de service déplacée transversalement et de les ramener à la position de fonctionnement avec les extrémités d'entrée des distributeurs (70, 70') alignées avec les extrémités de sortie des conduits de distribution (20) et des conduits de distribution alternatifs (20'), respectivement, dans lequel les mécanismes de remplacement de distributeur comprennent en outre une partie coulissante (75, 75') entourant le manchon au niveau de l'extrémité de sortie des conduits de distribution et des conduits de distribution alternatifs par l'intermédiaire d'un raccord de forage circulaire et avec un joint circulaire (76) et un joint avant (77).
